# EUROPÄISCHE PATENTSCHRIFT

(11) **EP 3 799 555 B1**
(45) Veröffentlichungstag und Bekanntmachung des Hinweises auf die Patenterteilung: **06.12.2023**
(21) Anmeldenummer: 20704310.0
(22) Anmeldetag: 14.02.2020
(51) Int. Cl.: A47J 31/44

(54) **MILCHFÖRDERVORRICHTUNG FÜR EINEN KAFFEEVOLLAUTOMATEN UND KORRESPONDIERENDES VERFAHREN**
MILK TRANSPORT DEVICE FOR A COFFEE MACHINE AND CORRESPONDING METHOD
DISPOSITIF DE TRANSPORT DE LAIT POUR UNE MACHINE À CAFÉ ENTIÈREMENT AUTOMATIQUE ET PROCÉDÉ CORRESPONDANT

(30) Priorität: 22.08.2019 EP 19193186
(43) Veröffentlichungstag der Anmeldung: 07.04.2021
(73) Patentinhaber: JURA Elektroapparate AG, 4626 Niederbuchsiten (CH)
(72) Erfinder: SANDRO, Klepzig, 5723 Teufenthal (CH)
(74) Vertreter: Mertzlufft-Paufler, Cornelius
(86) Internationale Anmeldenummer: PCT/EP2020/053972
(87) Internationale Veröffentlichungsnummer: WO 2021/032322

(56) Entgegenhaltungen:
- EP-A1- 2 540 200
- EP-A1- 3 210 505
- FR-A1- 2 638 083

## Beschreibung

Die Erfindung betrifft eine Milchfördervorrichtung mit einer Dampfdüse zur Erzeugung eines Dampfstroms und einer sich an eine Dampfaustrittsöffnung der Dampfdüse anschließenden Mischkammer, wobei die Milch an einem Eintrittsort in die Mischkammer geführt ist, wobei der Eintrittsort in Bezug auf eine Richtung des Dampfstroms der Dampfaustrittsöffnung vorgelagert ist. Eine solche Milchfördervorrichtung kann insbesondere in einem Kaffeevollautomaten verwendet werden, um Milch für Kaffeegetränke zu fördern. Darüber hinaus kann eine solche Milchfördervorrichtung auch als eine Milchaufschäumvorrichtung verwendet werden, um Milchschaum zu produzieren und zu fördern.

Weiter betrifft die Erfindung ein zugehöriges Verfahren zum Fördern von Milch, insbesondere in Form von Milchschaum, mit Hilfe eines von einer Dampfdüse erzeugten Dampfstroms, wobei die Förderung der Milch auf Basis des Venturi-Effekts erfolgt.

Viele Kaffeemaschinen, insbesondere Kaffeevollautomaten, besitzen eine wie eingangs beschriebene Milchfördervorrichtung zum Zubereiten von Kaffeespezialitäten mit Milch. Da Pumpen teuer sind, wird dabei auf das Venturi-Prinzip zurückgegriffen, um die Milch zu fördern: Hierbei wird mit Hilfe der besagten Dampfdüse ein Unterdruck erzeugt, um Milch aus einem Behälter oder ähnlichem anzusaugen, wobei sich der Dampf mit der Milch in der besagten Mischkammer zu einem Dampf-Milch Gemisch vermengt.

Der Venturi-Effekt beruht dabei auf der Tatsache, dass bei Verengung eines Flussquerschnittes der Dampfdüse notwendigerweise die Geschwindigkeit des Dampfstroms steigt, was zu einem Absinken des Drucks führt. Diese Zusammenhänge werden durch die bekannte Bernoullie-Gleichung beschrieben. Steigert man die Geschwindigkeit des Dampfstroms, so sinkt der Druck unter den Umgebungsdruck und es entsteht somit ein Unterdruck. Mittels dieses Unterdrucks können dann ein anderes Fluid, also beispielsweise Milch, oder sogar Festkörper angezogen werden.

Je nachdem, ob mit der Fördervorrichtung Milch oder Milchschaum bereitgestellt werden soll, kann dem Dampf-Milch Gemisch zudem noch Luft zugeführt werden, um Milchschaum zu erhalten. Wird Milchschaum gefördert, so wird dabei typischerweise eine möglichst feinporige Qualität des Milchschaums angestrebt.

EP 2 540 200 A1 betrifft eine Milchaufschäumeinheit, die ebenfalls auf dem Venturi-Effekt beruht. Hierbei bildet die Milchstromleitung oder Milch-Luftstromleitung einen Teil der Mischkammer aus. Weiter ist die Milchstromleitung oder Milch-Luftstromleitung hier nach dem Gegenstromprinzip aufgebaut - weist also Richtungswechsel auf, die nahezu 180 Grad aufweisen. Dadurch bilden sich Spitzkehren aus, die besonders zur Ablagerung von Verschmutzungen durch stehende Milch neigen können.

FR 2 638 083 A betrifft eine Milchaufschäumeinheit, bei der die Milchleitung nicht durch einen strukturell definierten Eintrittsort von der Mischkammer abgegrenzt ist.

Bei vorbekannten Milchfördervorrichtungen ist oftmals nicht optimal, dass ein Austrittsstrahl der Milch beziehungsweise des Milchschaums aus der Vorrichtung nicht kompakt ist. Dies hat oftmals damit zu tun, dass die Umsetzung des Venturi-Prinzips an ihre physikalischen Grenzen stößt. Dies gilt insbesondere dann, wenn - beispielsweise zur Erzeugung einer hohen Temperatur der Milch beziehungsweise des Milchschaums - die Milch nur mit einer sehr geringen Förderrate gefördert wird, bei konstanter Flussrate des Dampfstroms. Entsprechend ist bei sehr geringen Flussraten der Milch oftmals ein Pulsieren des geförderten Milchstroms oder gar ein abruptes Abreißen desselben zu beobachten.

Ausgehend von diesen Beobachtungen ist es Aufgabe der Erfindung, eine Milchfördervorrichtung beziehungsweise ein zugehöriges Verfahren bereit zu stellen, die eine stabile Förderung auch bei sehr geringen Flussraten noch ermöglichen. Zur Lösung dieser Aufgabe sind erfindungsgemäß bei einer Milchfördervorrichtung die Merkmale von Anspruch 1 vorgesehen. Insbesondere wird somit erfindungsgemäß zur Lösung der Aufgabe bei einer Milchfördervorrichtung der eingangs genannten Art vorgeschlagen, dass der Eintrittsort mittels einer Verengung gebildet ist. Durch die Verengung wird eine strukturelle Grenze der Mischkammer ausgebildet, so dass ein Zurückströmen von Dampf und/oder einem Dampf-Milchgemisch aus der Mischkammer in die Milchleitung besser verhindert werden kann.

Mit anderen Worten wird demnach vorgeschlagen, dass die Milch so in die Mischkammer eintritt, dass sie eine Strecke in Richtung des Dampfstroms oder längs zu diesem zurücklegt, bevor sie mit dem Dampfstrom vereinigt wird. Da die Milch typischerweise als ein Milchstrom in die Mischkammer gelangt, kann es somit innerhalb der Mischkammer einen Abschnitt geben, in welchem der Milchstrom in gleicher Richtung wie der Dampfstrom fließt noch bevor sich der Milchstrom mit dem Dampfstrom zu einem Milch-Dampf-Strom vereinigt.

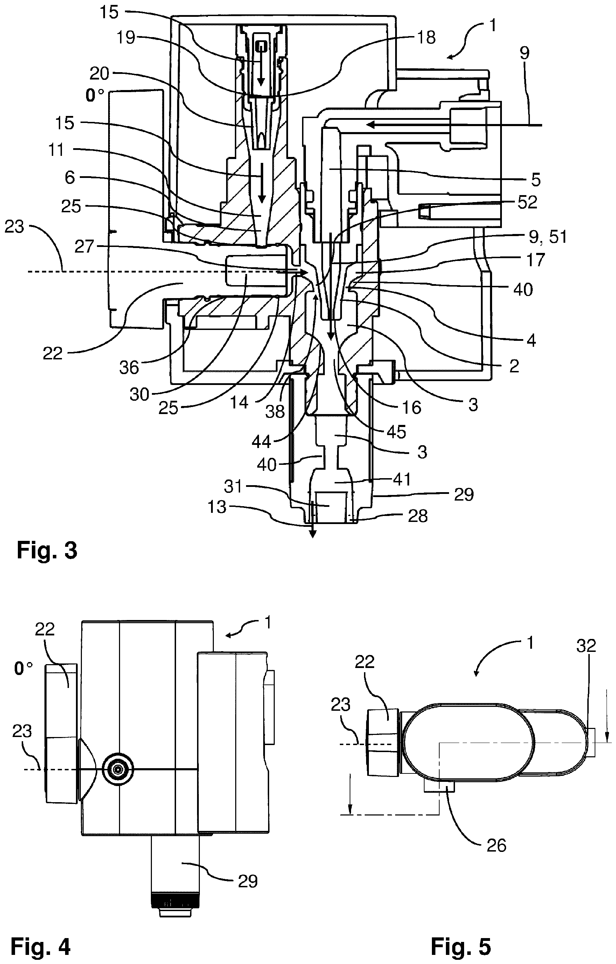

Unter Vorverlagerung des Eintrittsorts kann demnach insbesondere eine Anordnung verstanden werden, in welcher der Eintrittsort, entgegen einer Richtung des Dampfstroms in einer Dampfaustrittsöffnung der Dampfdüse, beabstandet von der Dampfaustrittsöffnung angeordnet ist (Vgl. dazu die Figur 3). Bei einer solchen Anordnung ist demnach der Eintrittsort bezogen auf die Dampfaustrittsöffnung und den Dampfstrom zurückverlagert.

Vorteilhaft an allen diesen Ausgestaltungen ist, dass eine Strömungsrichtung des Milchstroms in Richtung des Dampfstroms ausgerichtet werden kann, noch bevor der Milchstrom mit dem Dampfstrom vereinigt wird. Anders als bei vorbekannten Vorrichtungen, trifft der Milchstrom also nicht mehr in einem mehr oder weniger großen Winkel, insbesondere rechten Winkel auf den Milchstrom, sondern der Milchstrom lagert sich an den Dampfstrom tangential an und wird dabei von dem Dampfstrom gleichmäßig befördert.

Im Ergebnis ist zu beobachten, dass mit der erfindungsgemäßen Lösung ein mit der Vorrichtung geförderter Milch- oder Milchschaumstrahl aus der Mischkammer viel sanfter austritt, was insbesondere akustisch wahrnehmbar ist. Dieses gleichmäßige Ausfließen aufgrund einer kontinuierlichen Förderrate kann dabei auch bei sehr kleinen Förderraten aufrecht erhalten werden, aufgrund der stabileren Umsetzung des Venturi-Prinzips durch die neuartige Anordnung des Eintrittsorts und die damit verbundene neuartige Heranführung des Milchstroms an den ihn befördernden Dampfstrom.

Die Vorteile der erfindungsgemäßen Lösung lassen sich weiter vergrößern durch Ausführungen, die in den Unteransprüchen beschrieben sind.

So kann etwa eine Beimischöffnung für Milch oder auch für Milch und Luft vorgesehen sein, die den Eintrittsort definiert und in die Mischkammer mündet. Diese Beimischöffnung kann nun gerade so ausgerichtet und/oder geformt sein, dass die Milch als ein Milchstrom in Richtung des Dampfstroms an den Dampfstrom heran geführt ist. Dieses Heranführen kann insbesondere so ausgestaltet sein, dass in einem Bereich, in dem der Milchstrom den Dampfstrom kontaktiert und/oder sich mit dem Dampfstrom vereinigt, eine Strömungsrichtung des Milchstroms bezogen auf eine Strömungsrichtung des Dampfstroms tangential verläuft. Hierbei kann nach der Vereinigung von Milch und Dampf die Strömungsrichtung des Milchstroms mit der des Dampfstroms gerade zusammenfallen, insbesondere derart, dass Milch und Dampf als ein gemeinsamer Milch-und-Dampf-Strom weiterfließen.

Das Heranführen kann ferner vorzugsweise derart ausgestaltet sein, dass in einem der Dampfaustrittsöffnung vorgelagerten Bereich der Mischkammer der Milchstrom in Richtung des Dampfstroms, insbesondere entlang einer Außenfläche der Dampfdüse, strömt. Dies ist beispielsweise möglich, wenn eine Dampfaustrittsöffnung der Dampfdüse und die besagte Beimischöffnung in dieselbe Richtung zeigen.

Vorzugsweise kann die Beimischöffnung hierzu ringförmig ausgebildet und/oder konzentrisch zur Dampfdüse angeordnet sein. Ferner ist es vorteilhaft, wenn die Beimischöffnung der Dampfaustrittsöffnung vorgelagert ist. Durch solche Ausgestaltungen kann insbesondere erzielt werden, dass der aus der Dampfaustrittsöffnung austretende Dampfstrom von einem in Richtung des Dampfstroms fließenden Mantelstrom aus Milch oder aus Milch-und-Luft ringförmig eingehüllt wird, was eine besonders gleichförmige Milchförderung in die Mischkammer zur Folge hat.

Gemäß einer weiteren bevorzugten Ausgestaltung kann eine Außenfläche der Dampfdüse den Eintrittsort, das heißt insbesondere die besagte Beimischöffnung zumindest abschnittsweise begrenzen. Dies ist beispielsweise möglich, wenn die Beimischöffnung ringförmig um die Dampfdüse angeordnet ist.

Die Verengung separiert eine der Mischkammer vorgelagerte Ansaugkammer von der Mischkammer. Eine solche Ansaugkammer ist vorteilhaft, um den Milchstrom vor Eintritt in die Mischkammer auszurichten. Ferner kann die Ansaugkammer auch dazu genutzt werden, Milch mit Luft zu einem Milch-und-Luft-Strom zu vermischen, der dann durch die Beimischöffnung in die Mischkammer gelangen kann.

Es kann besonders vorteilhaft sein, wenn die Verengung durch einen Verengungsabschnitt mit konstantem Öffnungsquerschnitt ausgebildet ist. Insbesondere kann der Verengungsabschnitt abschnittsweise einen konstanten Öffnungsquerschnitt, insbesondere über eine gesamte Länge des Verengungsabschnitts, aufweisen. Somit kann eine noch bessere strukturelle Grenze der Mischkammer gegenüber der Milchleitung eingerichtet werden. Somit ist eine besonders gute Beimischung der Milch zum Dampf möglich.

Auch die Ansaugkammer umgibt die Dampfdüse ringförmig, was insbesondere bei Verwendung einer ringförmigen Beimischöffnung vorteilhaft ist.

Ganz besonders vorteilhaft ist es, wenn die Ansaugkammer und/oder die Dampfdüse eine Umlenkfläche zum Umlenken des Milchstroms in Richtung des Dampfstroms aufweist / aufweisen. Denn mit einer solchen Umlenkfläche ist es möglich einen Milchstrom, der zunächst in einem, insbesondere rechten, Winkel zum Dampfstrom verläuft, in Richtung des Dampfstroms auszurichten.

Die Umlenkung des Milchstroms mittels einer oder mehrere Umlenkflächen kann insbesondere derart ausgestaltet werden, dass der Milchstrom die Beimischöffnung bereits in Richtung des Dampfstroms passiert, was eine besonders sanfte Milchförderung zur Folge hat.

Um Schmutzablagerungen ausgelöst durch stehende Milch innerhalb der Milchleitung besser vermeiden zu können, kann es vorgesehen sein, dass eine Strömungsführung eines Milchstroms oder eines Milch-Luft-Stroms vor dem Eintrittsort eine maximale Richtungsänderung von höchstens 120 Grad, insbesondere von höchstens 90 Grad, aufweist. Alternativ oder ergänzend kann es vorgesehen sein, dass die Strömungsführung spitzkehrenfrei ausgebildet ist.

Gemäß einer spezifischen Ausgestaltung ist es für eine gleichmäßige Förderrate ferner vorteilhaft, wenn ein Abstand zwischen dem Eintrittsort und der Dampfaustrittsöffnung größer ist als ein lichter Durchmesser der Dampfaustrittsöffnung und/oder als eine lichte Weite der Beimischöffnung und/oder ein Außendurchmesser der Dampfdüse an der Stelle der Dampfaustrittsöffnung. Durch solche Ausgestaltungen wird jeweils sichergestellt, dass der Milchstrom ohne größere Turbulenzen, wie sie beim Passieren der Beimischöffnung entstehen können, mit dem Dampfstrom vereinigt wird, sodass der entstehende Milch-und-Dampfstrom gleichmäßig gefördert wird.

Soll mit der Milchfördervorrichtung Milchschaum gefördert werden, so kann eine der Mischkammer in Dampfströmungsrichtung nachgelagerte Zerstäubungskammer, insbesondere als Teil der Mischkammer, ausgebildet sein. Diese Zerstäubungskammer, die der Herstellung eines Aerosols aus Milch und Luft, also von Milchschaum, dient, kann vorzugsweise mittels einer Verengung von der Mischkammer separiert sein. Ferner kann die Zerstäubungskammer einen Prallkörper zum Zerstäuben von Milch aufweisen. Dieser Prallkörper kann eine plane Fläche ausbilden, die rechtwinklig zum Dampf-Milch-Strom ausgerichtet ist.

Um die Erzeugung von möglichst feinporigem Milchschaum zu ermöglichen, kann die Milchfördervorrichtung zwischen der Mischkammer und der Zerstäubungskammer einen Beschleunigungsabschnitt zum Beschleunigen eines Dampf-Milch-Gemischs ausbilden.

Für eine gleichmäßige Förderrate des Milchstroms beziehungsweise des Milch-Dampf-Stroms ist ferner entscheidend, dass die Vermischung der Milch mit dem Dampf ohne größere Turbulenzen geschieht. Hierzu wird vorgeschlagen, dass die die Mischkammer einen Fangtrichter aufweist, der den Dampfstrom und Milchstrom auffängt und vereinigt. Dieser Fangtrichter ist bevorzugt zur Dampfaustrittsöffnung ausgerichtet, insbesondere derart, dass eine Rotationsachse des Fangtrichters mit einer Dampfaustrittsrichtung zusammenfällt. Ferner ist es vorteilhaft, wenn sich der Dampftrichter in Dampfströmungsrichtung verengt. Der Dampftrichter kann ferner in den besagten Beschleunigungsabschnitt münden.

Wie bereits erwähnt wurde, kann die Milchförderrichtung insbesondere in Form einer Milchaufschäumvorrichtung ausgestaltet sein beziehungsweise als eine solche verwendet werden. Hierzu kann ein von der Milchfördervorrichtung geförderter Milchstrom, der an dem Eintrittsort in die Mischkammer strömt, noch vor dem Eintrittsort mittels eines variablen Öffnungsquerschnitts einstellbar sein, wie weiter unten noch genauer zu erläutern sein wird.

Soll Milchschaum gefördert werden, so kann die Milchfördervorrichtung beziehungsweise die Milchaufschäumvorrichtung eine Luftzuführung aufweisen. Diese Luftzuführung kann so ausgestaltet sein, dass, insbesondere gleichzeitig mit dem Milchstrom, ein Luftstrom durch den variablen Öffnungsquerschnitt leitbar ist.

Somit kann also insbesondere ein Milch-und-Luft-Strom am Eintrittsort in die Mischkammer geführt sein.

Mit anderen Worten kann demnach der Milchstrom einen Luftanteil aufweisen und somit als ein Milch-und-Luft-Strom in die Mischkammer gelangen. In der Folge kann somit in der Mischkammer insbesondere ein Dampf-Milch-Luft-Gemisch entstehen. Und aus dem Dampf-Milch-Luft-Gemisch kann dann durch entsprechende turbulente Verwirbelung in der besagten Zerstäubungskammer ein Milchschaum erzeugt werden.

Mit dem veränderbaren Öffnungsquerschnitt, durch den die Luft und die Milch als ein Milch-und-Luft-Strom fließen kann, kann eine Flussrate des Milch-und-Luft-Stroms eingestellt werden. Dabei kann das Verhältnis zwischen Luft und Milch beibehalten werden, da die Milch bei Durchströmen des Öffnungsquerschnitts die Luft mitreißt. Dadurch kann es nicht mehr - wie vorher im Stand der Technik häufig zu beobachten - zu einem Abreißen des Milchstroms kommen, was für eine kontinuierliche Förderrate der Milch von großem Vorteil ist.

Zur Lösung der genannten Aufgabe sind zudem erfindungsgemäß die Merkmale des unabhängigen Verfahrensanspruchs vorgesehen. Insbesondere wird somit erfindungsgemäß zur Lösung der Aufgabe bei einem Verfahren zum Fördern von Milch der eingangs beschriebenen Art vorgeschlagen, dass die Milch als ein Milchstrom längs des Dampfstroms ausgerichtet wird.

Bei diesem erfindungsgemäßen Verfahren ist es besonders vorteilhaft für die Erzeugung einer möglichst gleichmäßigen Milchförderung auch bei sehr geringen Flussraten, wenn eine erfindungsgemäße Milchfördervorrichtung, insbesondere wie zuvor beschrieben oder gemäß einem der auf eine Milchfördervorrichtung gerichteten Ansprüche verwendet wird.

Demnach kann insbesondere alternativ zu der Ausrichtung des Milchstroms bevorzugt jedoch ergänzend vorgesehen sein, dass die Milch an einem Eintrittsort in die Mischkammer geführt wird, der einer Dampfaustrittsöffnung der besagten Dampfdüse - bezogen auf eine Richtung des Dampfstroms - vorgelagert ist. Die Längs-Richtung beziehungsweise Strömungsrichtung des Dampfstroms kann dabei bevorzugt durch die Dampfaustrittsöffnung der Dampfdüse definiert sein.

Ein solches erfindungsgemäßes Verfahren realisiert alle zuvor mit Bezug auf die erfindungsgemäße Vorrichtung beschriebenen Vorteile, insbesondere eine gleichmäßige Förderung der Milch auch bei sehr geringen Förderraten der Milch.

Ganz besonders vorteilhaft für eine effiziente und möglichst sanfte, d.h. störungsfreie, Milchförderung auf Basis des Venturi-Prinzips ist es, wenn der Milchstrom in Richtung des Dampfstroms ausgerichtet wird, noch bevor der Dampfstrom mit der Milch in einer Mischkammer vereinigt wird. Diese Mischkammer kann sich, insbesondere wie bereits zuvor beschrieben, an eine Dampfaustrittsöffnung der Dampfdüse anschließen. Unter Vereinigung kann hier der Punkt verstanden werden, an dem sich der Milchstrom und der Dampfstrom berühren und zu einem gemeinsamen Milch-Dampf-Strom vereinigen, wobei noch nicht notwendig eine turbulente Vermischung der Milch mit dem Dampf stattfinden muss; letzteres kann vielmehr erst in einer nachgelagerten Zerstäubungskammer erfolgen.

Besonders einfach lässt sich eine solche Führung des Milchstroms erzielen, mit Hilfe einer Beimischöffnung, die einer Dampfaustrittsöffnung der Dampfdüse vorgelagert ist. Diese Beimischöffnung kann wie bereits zuvor beschrieben ausgestaltet sein und insbesondere in Richtung des von der Dampfdüse abgegebenen Dampfstroms ausgerichtet sein. Durch die obigen Maßnahmen kann der Milchstrom insbesondere so geführt werden, dass der Milchstrom bereits in Richtung des Dampfstroms strömt, wenn er in die Mischkammer, insbesondere durch die besagte Beimischöffnung, einströmt.

Eine solche Milchströmung lässt sich beispielsweise erzeugen, wenn der Milchstrom mittels mindestens einer Umlenkfläche in einer der Mischkammer vorgelagerten Ansaugkammer ausgerichtet wird.

Ferner ist es für ein effizientes Befördern des Milchstroms auch bei geringen Förderraten vorteilhaft, wenn der Milchstrom konzentrisch zur Dampfdüse in die besagte Mischkammer strömt.

Dies kann beispielsweise erreicht werden, wenn der Milchstrom in einem Bereich, der einer Dampfaustrittsöffnung der Dampfdüse vorgelagert ist, in Richtung des Dampfstroms entlang einer Außenfläche der Dampfdüse strömt.

Um konstruktive Vorteile zu erzielen, beispielsweise um Raum in einem Kaffeevollautomaten optimal zu nutzen, kann es vorteilhaft sein, wenn der Milchstrom quer zur Richtung des Dampfstroms in die zuvor erläuterte Ansaugkammer strömt. Danach kann der Milchstrom dann mittels der Umlenkflächen um 90° umgelenkt werden, um den Milchstrom zum Dampfstrom auszurichten.

Um turbulente Strömungen im Bereich der Dampfdüse noch zu vermeiden, kann gemäß der Erfindung vorgesehen sein, dass mittels eines Fangtrichters der Milchstrom mit dem Dampfstrom in der Mischkammer vereinigt wird. Der Fangtrichter kann dabei bevorzugt rotationssymmetrisch ausgebildet und/oder zu einer Dampfaustrittsöffnung der Dampfdüse ausgerichtet sein.

In allen zuvor erläuterten Ausführungen kann zudem vorgesehen sein, dass der Milchstrom einen Luftanteil aufweist zur Bildung eines Dampf-Milch-Luft-Gemischs. Dieser Luftanteil kann dem Milchstrom in Form eines Luftstroms beigemischt werde und zwar noch bevor der so entstehende Milch-Luft-Strom in die Mischkammer gelangt, um dort mit dem Dampfstrom zu einem Dampf-Milch-Luft-Gemisch vermengt zu werden.

Gerade wenn heißer Milchschaum erzeugt werden soll, ist es besonders vorteilhaft, wenn der besagte Luftanteil als ein Luftstrom zusammen mit dem Milchstrom als ein Milch-und-Luft-Strom durch einen variablen Öffnungsquerschnitt geleitet wird, noch bevor der Milch-und-Luft-Strom in die Mischkammer gelangt. Die Vorteile eines solchen Vorgehens liegen darin, dass es zu keinem Überhandnehmen des Luftstroms mehr kommen kann, sodass auch bei geringen Förderraten stets ein gewünschtes Verhältnis von Luft zu Milch beibehalten werden kann, was bereits anhand der erfindungsgemäßen Vorrichtung erläutert wurde und auch nochmals anhand der Figuren erläutert wird.

Weitere Ausgestaltungen umfassen darüber hinaus noch weitere innovative Aspekte und betreffen diesbezüglich eine Milchfördervorrichtung, die als eine Milchaufschäumvorrichtung eingesetzt werden kann, mit einer Dampfdüse und einer sich an die Dampfdüse anschließenden Mischkammer zum Herstellen von Milchschaum aus Dampf, Milch und Luft, wobei ein in die Mischkammer gelangender Milchstrom mittels eines veränderbaren Öffnungsquerschnitts einstellbar ist.

Weitere Ausgestaltungen betreffen ferner ein Verfahren zum Erzeugen von Milchschaum mit Hilfe einer Milchfördervorrichtung beziehungsweise Milchaufschäumvorrichtung, insbesondere wie hier beschrieben, wobei Luft und Milch in einer Mischkammer mittels eines Dampfstroms zu dem Milchschaum aufgeschäumt werden und wobei ein in die Mischkammer gelangender Milchstrom mittels eines veränderbaren Öffnungsquerschnitts eingestellt wird.

Derartige Vorrichtungen und Verfahren sind ebenfalls bereits bekannt und werden insbesondere in Kaffeevollautomaten eingesetzt, um vollautomatisch Milchschaum für Kaffee-Getränke herzustellen. Dabei soll typischerweise der Milchschaum möglichst feinporig sein.

Oftmals kann der Benutzer des Kaffeevollautomaten zudem auch die Temperatur des Milchschaums einstellen, in dem er den besagten Milchstrom, aus welchem durch Vermischen mit Luft der Milchschaum hergestellt wird, einstellt, sodass im Verhältnis zu einer aufzuschäumenden Menge Milch mehr oder weniger heißer Dampf pro Zeiteinheit zur Erwärmung des Milchschaums zur Verfügung steht. Dabei erhöht sich typischerweise die Temperatur des Milchschaumes, je geringer der Milchstrom eingestellt wird, d.h. je stärker der Milchstrom gedrosselt wird.

Mit diesem Ansatz lässt sich die Temperatur des Milchschaums allerdings nicht beliebig steigern. Denn typischerweise ist zu beobachten, dass die Feinporigkeit des Milchschaums mit zunehmender Temperatur, d.h. bei abnehmender Flussrate des Milchstroms, abnimmt, was unerwünscht ist. Daher kann die Feinporigkeit des Milchschaums typischerweise nur bis zu Temperaturen von 40-50°C aufrechterhalten werden.

Zudem ist ein häufiges Problem, dass der Milchstrom bei zu geringer Flussrate (d.h. zu geringem Milchstrom) zu pulsieren beginnt, oder ganz abreißt, was dann in einem unerwünschten Stocken beziehungsweise ungleichmäßigem Ausfließen des Milchschaums resultiert.

Zur Vermeidung der vorgenannten Nachteile wird vorgeschlagen, dass die Luft als ein Luftstrom durch den veränderbaren Öffnungsquerschnitt in die Mischkammer geführt ist.

Der veränderbare Öffnungsquerschnitt kann dabei als eine Drossel wirken, mit der eine Flussrate sowohl des Milchstroms (wie bislang üblich) aber auch eine Flussrate des Luftstroms regelbar ist. Anders als bei bislang bekannten Milchaufschäumvorrichtungen ist der Luftstrom somit nicht länger unabhängig von dem Milchstrom, sondern eine Flussrate des Luftstroms ist abhängig von einer Flussrate des Milchstroms. Dabei reduziert sich der Luftstrom automatisch, sobald der Milchstrom durch Verringerung des veränderbaren Öffnungsquerschnitts reduziert wird.

Dadurch kann gewährleistet werden, dass der Luftstrom nicht (wie bei vorbekannten Milchaufschäumvorrichtungen) die Oberhand gewinnt und der Milchstrom auf Kosten des Luftstroms abrupt abnimmt oder gar ganz abreißt, weil das Luftbeimischungsverhältnis zu groß geworden ist. Entsprechend kann ein Pulsieren oder ungleichmäßiges Ausfließen des Milchschaums aus der Milchaufschäumvorrichtung vermieden werden.

Eine mögliche Alternative hierfür bestünde in einer aktiven Drosselung beziehungsweise Regelung des Luftflusses mittels eines separaten Luftstrom-Regelventils oder dergleichen und zwar für den Fall, dass der Milchstrom abnimmt beziehungsweise aktiv reduziert wird, beispielsweise von einem Benutzer der Milchaufschäumvorrichtung.

Die Verwendung des wie zuvor beschriebenen veränderbaren Öffnungsquerschnitts hat den Vorteil, eine besonders einfache Ausgestaltung vorzuschlagen, mit der der Luftstrom - ohne zusätzliche aktive Regelkomponenten wie steuerbare Ventile oder dergleichen - automatisch anpassbar ist, sobald der Milchstrom mit Hilfe des veränderbaren Öffnungsquerschnitts verändert wird. Genauer kann mit durch Verwendung eines solchen veränderbaren Öffnungsquerschnitts der Luftstrom automatisch reduziert werden, sobald der Milchstrom reduziert wird.

Ursächlich hierfür könnte sein, dass die Luft mit der Milch eine gemeinsame fluidische Grenzfläche ausbildet, wenn die Luft zusammen mit der Milch durch den veränderbaren Öffnungsquerschnitt strömt. Dadurch ist es in Strömungssituationen, wie sie für die Herstellung von Milchschaum benötigt werden, verunmöglicht, dass der Milchstrom ganz abreißt. Bei bisherigen Lösungen, die getrennte Kanäle für Luft und Milch vorsehen, die erst kurz vor oder in der Mischkammer zusammengeführt sind, ist es hingegen durchaus möglich, dass der Milchstrom ganz abreißt, weil der Luftstrom die Oberhand gewinnt und die gesamte Mischkammer flutet.

Im Ergebnis kann mit dem zuvor erläuterten veränderbaren Öffnungsquerschnitt also selbst dann, wenn der Milchstrom sehr gering eingestellt wird (beispielsweise um eine entsprechend hohe Milchschaumtemperatur zu erzielen) durch eine entsprechend starke Verringerung des Öffnungsquerschnitts gewährleistet werden, dass der Luftstrom ausreichend stark gedrosselt wird. Dadurch kann auch noch bei Temperaturen oberhalb von 50°C feinporiger Milchschaum mit der erfindungsgemäßen Milchaufschäumvorrichtung hergestellt werden. Wird der Milchstrom minimiert, sind Milchschaumtemperaturen von bis zu 75°C erzielbar, wobei sich auch bei diesen hohen Temperaturen feinporiger, cremiger Milchschaum gewinnen lässt.

Ein weiterer Vorteil der Milchaufschäumvorrichtung besteht darin, dass zu Beginn eines Bezugs von Milchschaum aus der Milchaufschäumvorrichtung, also dann, wenn die Flussrate des Milchstroms von Null allmählich gesteigert wird, ein sanfter Austritt von Milchschaum zu beobachten ist und nicht etwa ein abrupter, teilweise explosionsartiger, Austritt, wie dies bei vorbekannten Milchaufschäumvorrichtungen oftmals zu beobachten ist. Mit anderen Worten stellt die erfindungsgemäße Milchaufschäumvorrichtung sicher, dass Milchschaum auch bei sehr geringer Förderrate gleichmäßig, das heißt mit gleichbleibender Förderrate, aus der Milchaufschäumvorrichtung fließt.

Die Milchaufschäumvorrichtung kann hierzu eine Milchzuführung und eine Luftzuführung aufweisen, die so ausgestaltet sind, dass die Luft zusammen, insbesondere gleichzeitig, mit der Milch den veränderbaren Öffnungsquerschnitt als ein Milch-und-Luft-Strom passieren kann. Somit können also der Luftstrom und der Milchstrom den Milch-und-Luft-Strom ausbilden. Hierzu kann der Luftstrom noch vor dem veränderbaren Öffnungsquerschnitt mit dem Milchstrom vereinigt werden, etwa an einer Mündungsstelle, an welcher die Luftzuführung in die Milchzuführung mündet.

Ferner kann im Bereich des veränderbaren Öffnungsquerschnitts der Luftstrom den Milchstrom zumindest teilweise begrenzen. Mit anderen Worten kann der Luftstrom mit dem Milchstrom eine gemeinsame fluidische Grenzfläche ausbilden im Bereich des veränderbaren Öffnungsquerschnitts. Über diese Grenzfläche kann der Luftstrom fluidische Reibungskräfte auf den Milchstrom übertragen, sodass eine fluidische Kopplung zwischen dem Milchstrom und dem Luftstrom erzielt wird.

Aufgrund der Kopplung bewirkt eine Zunahme/Abnahme des Luftstroms eine Zunahme/Abnahme des Milchstroms und umgekehrt.

Der veränderbare Öffnungsquerschnitt kann demnach gerade so dimensioniert sein, dass eine Einstellung des veränderbaren Öffnungsquerschnitts sowohl den Milchstrom als auch den Luftstrom, insbesondere gleichzeitig, einstellt.

Durch eine solche Ausgestaltung kann insbesondere erreicht werden, dass die Luft und die Milch stets gemeinsam, insbesondere gleichzeitig, durch den veränderbaren Öffnungsquerschnitt fließen können. Dies kann vorzugsweise derart geschehen, dass ein Abreißen und/oder Pulsieren des Milchstroms verhinderbar ist. Demnach kann also der Luftstrom durch Einstellen des veränderbaren Öffnungsquerschnitts synchron und/oder gleichläufig mit dem Milchstrom einstellbar sein. Wie bereits eingangs erwähnt, kann eine solche Einstellung gemäß der Erfindung vorzugsweise unter Verzicht auf eine zusätzliche aktive Regelung des Luftstroms erfolgen. Denn dadurch kann die Milchaufschäumvorrichtung konstruktiv einfach ausgestaltet und somit kostengünstig gefertigt werden.

Für eine gleichmäßige Produktion von feinporigem Milchschaum ist es besonders vorteilhaft, wenn der veränderbare Öffnungsquerschnitt einer Beimischöffnung für Luft und Milch, welche in die Mischkammer mündet, (in Strömungsrichtung) vorgelagert ist. Denn dadurch kann bereits eine Durchmischung der Luft mit der Milch noch vor Eintritt in die eigentliche Mischkammer erfolgen, in welcher mit Hilfe von Dampf der eigentliche Aufschäumprozess abläuft. Es kann somit insbesondere der zuvor erwähnte Milch-und-Luft-Strom durch die Beimischöffnung in die Mischkammer geführt sein.

Die Qualität des Milchschaums lässt sich weiter steigern, wenn die Milchaufschäumvorrichtung so konstruktiv ausgestaltet ist, dass der Milch-und-Luft-Strom noch vor der besagten Beimischöffnung durch eine Ansaugkammer geführt ist, welche der Mischkammer vorgelagert ist. Hierzu kann der Milch-und-Luft-Strom mittels einer Milch-und-Luft-Zuleitung in die Mischkammer geführt sein. Diese Milch-und-Luft-Zuleitung kann dabei die besagte Ansaugkammer umfassen. In der Ansaugkammer kann eine Vorab-Durchmischung der Milch und der Luft erfolgen. Zudem kann in der Ansaugkammer der Milch-und-Luft-Strom zu einem von der Dampfdüse der Milchaufschäumvorrichtung abgegebenen Dampfstrom ausgerichtet werden, wie noch genauer zu erläutern sein wird.

Aus all dem zuvor gesagten ist ersichtlich, dass es gemäß diesen Ausgestaltungen zu bevorzugen ist, die Milch mit der Luft zu vermischen noch bevor diese in Kontakt mit dem Dampf gerät. Mit anderen Worten kann also in der Milchaufschäumvorrichtung eine Vereinigung der Milch mit der Luft der besagten Dampfdüse vorgelagert sein.

Die besagte Dampfdüse der Milchaufschäumvorrichtung kann bevorzugt insbesondere so geformt sein, dass ein Dampfstrom erzeugbar ist, der einen Unterdruck auf Basis des Venturi-Effekts verursacht. Mit Hilfe dieses Unterdrucks kann der Milch-und-Luft-Strom, vorzugsweise ohne Unterstützung durch eine zusätzliche Pumpe, in die Mischkammer gefördert werden beziehungsweise förderbar sein. Dadurch kann die gesamte Milchaufschäumvorrichtung kostengünstig ohne eine separate Fördervorrichtung (wie etwa eine zusätzliche Pumpe) ausgestaltet werden.

Die Milchaufschäumvorrichtung kann ferner einen zusätzlichen Durchflussverminderer zum Begrenzen des Luftstroms aufweisen. Dies ist insbesondere dann sinnvoll, wenn der Luftstrom aus der Umgebungsluft bezogen wird.

Der Durchflussverminderer kann sehr einfach in Form einer Lochblende, beispielsweise mit einem Öffnungs-Durchmesser von < 0.5 mm, realisiert sein. Hierbei ist es bevorzugt, wenn zusätzlich zum Durchflussverminderer eine Lippendichtung zur Verhinderung eines Milchrückflusses vorgesehen ist. Diese kann idealerweise dem Durchflussverminderer in Luftstromrichtung nachgelagert sein, um zu verhindern, dass Milch durch den Durchflussverminderer fließt.

In allen vorherigen Ausgestaltungen ist es grundsätzlich zu bevorzugen, wenn der Öffnungsquerschnitt zumindest stufenweise, bevorzugt jedoch kontinuierlich veränderbar ist. Denn in diesem Fall ist ein Durchfluss des Milch-und-Luft-Stroms durch den veränderbaren Öffnungsquerschnitt zumindest stufenweise, bevorzugt jedoch kontinuierlich, einstellbar. Dadurch lässt sich die Temperatur des Milchschaums je nach persönlichen Bedürfnissen individuelle sehr genau einstellen.

Gemäß einer bevorzugten Ausgestaltung kann der Öffnungsquerschnitt durch Rotation eines Regelkörpers um eine Regelachse veränderbar sein. Vorzugsweise kann hierzu der veränderbare Öffnungsquerschnitt mittels eines Oberflächenkanals von variabler Tiefe auf dem Regelkörper realisiert sein. Dieser Oberflächenkanal, der vornehmlich den Milchstrom führen kann, kann vorzugsweise außenumfangsseitig, also insbesondere auf einem Außenumfang des Regelkörpers, ausgestaltet sein.

Ferner kann bei dieser Ausgestaltung vorgesehen sein, dass die die Luft mittels eines ebenfalls auf dem Regelkörper ausgebildeten Luft-Oberflächenkanals zum veränderbaren Öffnungsquerschnitt hingeführt ist. Vorzugsweise mündet dabei der Luft-Oberflächenkanal in den zuvor erläuterten Oberflächenkanal. Mit anderen Worten können somit der Luft-Oberflächenkanal und der (für den Milchstrom vorgesehene) Oberflächenkanal in einer Mündungsstelle zusammengeführt sein. In diesem Fall fließen somit nach dieser Mündungsstelle Luft und Milch gemeinsam durch den besagten Oberflächenkanal. Der veränderbare Öffnungsquerschnitt kann dabei an der Mündungsstelle oder nach der Mündungsstelle in dem Oberflächenkanal ausgebildet sein.

Gemäß einer weiteren, besonders vorteilhaften Ausgestaltung, kann zudem vorgesehen sein, dass der besagte Luftstrom nicht wie üblich aus der Umgebungsluft, sondern aus einer abschaltbaren Luftzufuhr gewonnen wird. Mit anderen Worten kann die Milchaufschäumvorrichtung somit eine Luft-Abschaltvorrichtung aufweisen, mit der der Luftstrom an- und abschaltbar ist.

Wird der Luftstrom mittels der Luft-Abschaltvorrichtung abgeschalten, kann keine Luft mehr in die Mischkammer gelangen, während der Milchstrom weiterhin in die Mischkammer förderbar ist. Somit kann bei abgeschaltetem Luftstrom mit der Milchaufschäumvorrichtung ein reiner Milchstrom gefördert werden. Dieser reine Milchstrom, der keinerlei Luft enthalten kann, kann dabei mit Hilfe der Dampfdüse erwärmt werden. Durch eine solche Ausgestaltung ist es mit der erfindungsgemäßen Milchaufschäumvorrichtung möglich, einen bis zu 80°C heißen Milchstrom zu fördern.

Vorteilhaft ist also, dass die Luftzufuhr beziehungsweise der Luftstrom in die Mischkammer mithilfe der Abschaltvorrichtung ein- und ausschaltbar ist. Dies kann insbesondere automatisch durch eine entsprechende Maschinensteuerung realisiert sein. Beispielsweise kann die Abschaltvorrichtung als ein elektrisch steuerbares Abschaltventil ausgestaltet sein. Dadurch muss keine separate Leitung mehr für die Förderung von heißer Milch vorgesehen werden, sondern aus der erfindungsgemäßen Milchaufschäumvorrichtung kann sowohl Milchschaum als auch heiße Milch förderbar sein.

Zur Vermeidung der vorgenannten Nachteile kann zudem vorgesehen sein, dass die Luft durch den veränderbaren Öffnungsquerschnitt in die Mischkammer einströmt. Mit diesem Verfahren lassen sich alle Vorteile realisieren, die bereits mit Bezug auf die Milchaufschäumvorrichtung erläutert wurden.

Die zuvor erläuterten Verfahren können in weiteren Ausgestaltungen noch weitere vorteilhafte Merkmale aufweisen.

Beispielsweise kann die Luft einen Luftstrom ausbilden, der zusammen, insbesondere gleichzeitig, mit dem Milchstrom als ein Milch-und-Luft-Strom durch den veränderbaren Öffnungsquerschnitt strömt. Dabei kann der Milch-und-Luft-Strom insbesondere durch Einstellen des veränderbaren Öffnungsquerschnitts eingestellt beziehungsweise geregelt werden. Ferner kann im Bereich des veränderbaren Öffnungsquerschnitts der Milchstrom durch den Luftstrom zumindest teilweise begrenzt werden, wie bereits zuvor erläutert wurde.

Durch Einstellen des veränderbaren Öffnungsquerschnitts kann gemäß dem Verfahren sowohl der Luftstrom als auch der Milchstrom eingestellt werden. Dies kann insbesondere gleichzeitig und/oder gleichläufig geschehen, sodass also etwa der Luftstrom automatisch reduziert wird, wenn der Milchstrom reduziert wird und/oder der Luftstrom automatisch erhöht wird, wenn der Milchstrom erhöht wird.

Ferner kann diese Einstellung vorzugsweise unter Verzicht auf eine zusätzliche aktive Regelung des Luftstroms geschehen.

Darüber hinaus ist es möglich, dass stets Luft und Milch gemeinsam, insbesondere gleichzeitig, durch den veränderbaren Öffnungsquerschnitt fließen, vorzugsweise ohne ein Abreißen und/oder Pulsieren des Milchstroms.

Der Dampfstrom wird mittels einer Dampfdüse erzeugt. Hierbei kann die Milch und die Luft ausschließlich aufgrund eines von der Dampfdüse der Milchaufschäumvorrichtung auf Basis des Venturi-Effekts erzeugten Unterdrucks, vorzugsweise ohne Unterstützung durch eine Pumpe, in die Mischkammer gefördert werden. Dieses Fördern kann vorzugsweise durch eine gemeinsame Milch-und-Luft-Zuleitung geschehen, die in einer Beimischöffnung für Luft und Milch endet, die ihrerseits in die Mischkammer mündet.

Mittels der Dampfdüse kann ein Unterdruck in der Mischkammer erzeugt werden, der die Milch zusammen mit der Luft aus der gemeinsamen Milch-und-Luft-Zuleitung ansaugt. Die gemeinsame Milch-und-Luft-Zuleitung kann vorzugsweise eine der Mischkammer in Milchströmungsrichtung vorgelagerte Ansaugkammer umfassen, in der der Milch-und-Luft-Strom zu dem Dampfstrom ausgerichtet werden kann, noch bevor der Milch-und-Luft-Strom durch die Beimischöffnung in die Mischkammer eintritt.

Gemäß einer bevorzugten Ausgestaltung des Verfahrens kann die Temperatur des Milchschaums erhöht werden, indem der Milch-und-Luft-Strom durch Verringern des Öffnungsquerschnitts reduziert wird. Hierbei kann insbesondere der Dampfstrom konstant gehalten oder erhöht werden. Ferner kann durch Verringern des Öffnungsquerschnitts sowohl der Luftstrom als auch der Milchstrom reduziert werden.

Schließlich kann der Luftstrom zusätzlich mittels eines Durchflussverminderers vermindert werden. Dies kann insbesondere mit einem Durchflussverminderer in Form einer Lochblende (vgl. die Erläuterungen oben) sowie vorzugsweise in Verbindung mit einer Lippendichtung (vgl. oben) zur Verhinderung eines Milchrückflusses geschehen.

Der Öffnungsquerschnitt kann stufenweise, bevorzugt jedoch kontinuierlich, verändert werden, um so den Milch-und-Luft-Strom stufenweise, bevorzugt jedoch kontinuierlich, einzustellen. Dadurch lässt sich die Temperatur des Milchschaums fein regeln.

Ferner kann der Öffnungsquerschnitt, wie bereits zuvor erläutert wurde, durch Rotation eines Regelkörpers um eine Regelachse verändert werden. Bevorzugt geschieht dies dadurch, dass eine den Öffnungsquerschnitt bestimmende Tiefe eines Oberflächenkanals auf dem Regelkörper durch Rotation des Regelkörpers verändert wird.

Die Erfindung wird nun anhand eines Ausführungsbeispiels näher beschrieben, ist aber nicht auf dieses Ausführungsbeispiel beschränkt.

Es zeigt:
- Fig. 1: eine perspektivische Ansicht einer erfindungsgemäßen Milchfördervorrichtung,
- Fig. 2: eine perspektivische Ansicht auf einen Längsschnitt der Milchfördervorrichtung aus Figur 1,
- Fig. 3: eine Draufsicht auf den Längsschnitt gemäß Figur 2,
- Fig. 4: eine Seitenansicht auf die Milchfördervorrichtung aus Figur 1,
- Fig. 5: eine Aufsicht von oben auf die Milchfördervorrichtung aus Figur 1,
- Fig. 6: eine perspektivische Detailansicht eines partiellen vertikalen Schnitts durch die Milchfördervorrichtung der Figur 1 entlang der in Figur 5 gezeigten Schnittlinie,
- Fig. 7: eine Draufsicht von oben auf einen horizontalen Schnitt durch den Regelkörper in der Stellung gemäß der Figur 6,
- Fig. 8: die Detailansicht aus Figur 6 nach Drehung des Regelkörpers der Milchfördervorrichtung um 90° im Uhrzeigersinn,
- Fig. 9: eine Draufsicht von oben auf einen horizontalen Schnitt durch den Regelkörper in der Stellung gemäß der Figur 8, in Analogie zu Figur 7,
- Fig. 10: eine perspektivische Detailansicht des Regelkörpers der Milchfördervorrichtung aus Figur 1 in der in Figur 1 und Figur 6 gezeigten 0° Position und
- Fig. 11: eine detaillierte Schnittansicht einer Mischkammer der Milchfördervorrichtung der Figur 1.

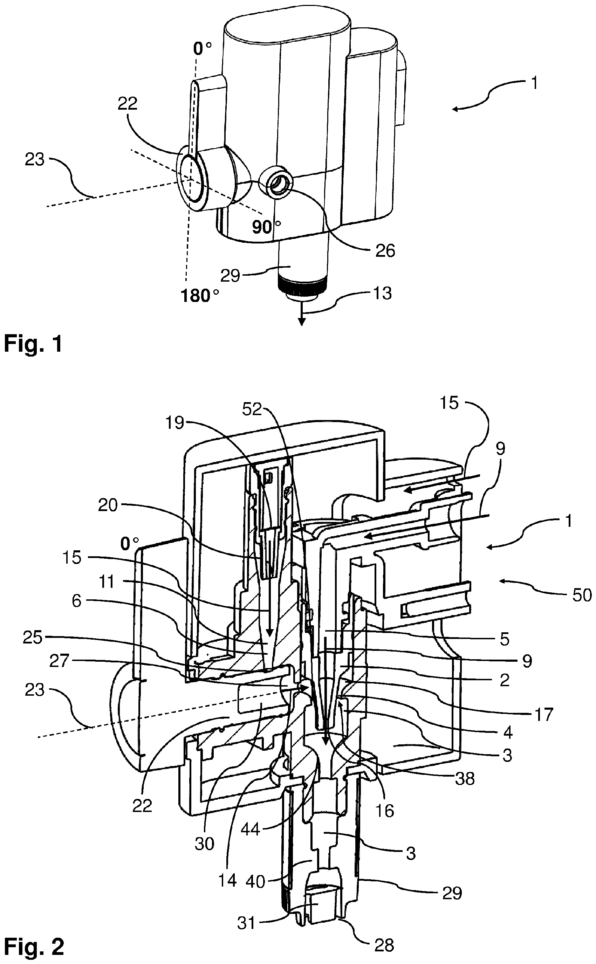

Die Figur 1 zeigt eine im Ganzen mit 1 bezeichnete erfindungsgemäße Milchfördervorrichtung, die zur Verwendung an einem Kaffeevollautomaten vorgesehen ist, mit dem sich verschiedene Kaffee-Getränke bereitstellen lassen, wobei die Milchfördervorrichtung 1 Milch für die Kaffee-Getränke durch den Kaffeevollautomaten und schließlich bis in eine Tasse befördert.

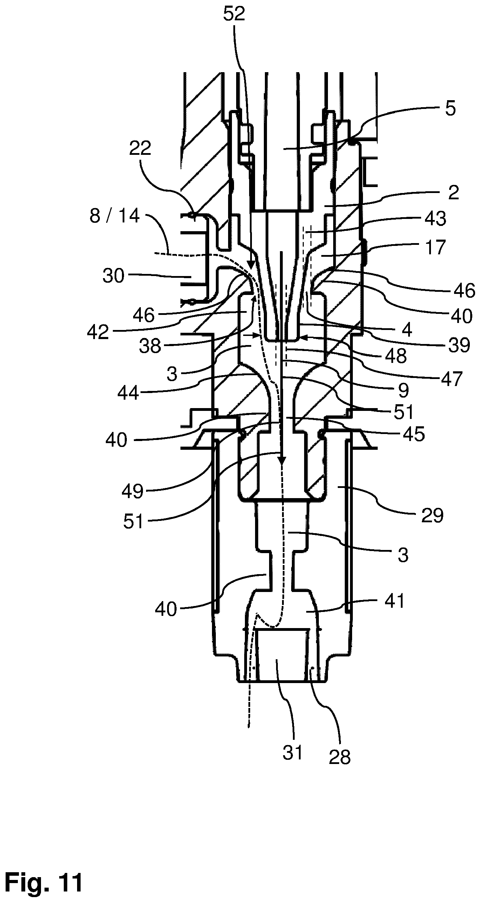

Wie in Figur 2 zu erkennen ist, weist die Milchfördervorrichtung 1 eine Dampfdüse 2 zur Erzeugung eines Dampfstroms 9 auf sowie eine Mischkammer 3, die sich an eine Dampfaustrittsöffnung 16 der Dampfdüse 2 anschließt. Die geförderte Milch 7 wird dabei als ein Milchstrom 8 entlang des in Figur 11 als eine gestrichelte Linie gezeigten (und mit Bezugszeichen 8 / 14 versehenen) Strömungspfads durch eine Beimischöffnung 4 in die Mischkammer 3 geführt. Die Beimischöffnung 4 mündet dabei in die Mischkammer 3 und definiert somit den Eintrittsort 38.

Wie insbesondere in den Figuren 2 und 11 gut zu erkennen ist, ist der Eintrittsort 38 der Dampfaustrittsöffnung 16 vorgelagert und zwar bezogen auf die Richtung des Dampfstroms 9, die in den Figuren mithilfe eines durch die Dampfaustrittsöffnung 16 verlaufenden geraden Pfeils illustriert ist. Die Vorverlagerung ist dabei derart bemessen, dass der in Figur 2 und noch besser in Figur 11 zu messende (in den Figuren vertikale) Abstand zwischen dem Eintrittsort 38 und der Dampfaustrittsöffnung 16 größer ist als der lichte Durchmesser 47 der Dampfaustrittsöffnung 16, größer als eine lichte Weite 43 der Beimischöffnung 4 und sogar größer als ein Außendurchmesser 48 der Dampfdüse 2 an der Stelle der Dampfaustrittsöffnung 16.

Durch dieses großzügige Vorverlagern des Eintrittsorts bzw. Verlängern der Dampfdüse 2 (jeweils im Vergleich zu vorbekannten Vorrichtungen) wird die in Figur 11 mithilfe der Strichlinie illustrierte Strömungsführung erreicht, bei der die Milch 7 als ein Milchstrom 8 in Richtung 51 des Dampfstroms 9 (vergleiche den Pfeil in Figur 11) an den Dampfstrom 9 herangeführt ist. Wie in Figur 11 zu erkennen ist, strömt dabei der Milchstrom 8 bereits in einem Bereich 42 der Mischkammer 3, der der Dampfaustrittsöffnung 16 vorgelagert ist, in Richtung 51 des Dampfstroms 9. Dies erkennt man insbesondere an der gestrichelten Linie in dem Bereich 42, wo der Milchstrom 8 entlang einer Außenfläche 39 der Dampfdüse 2 strömt.

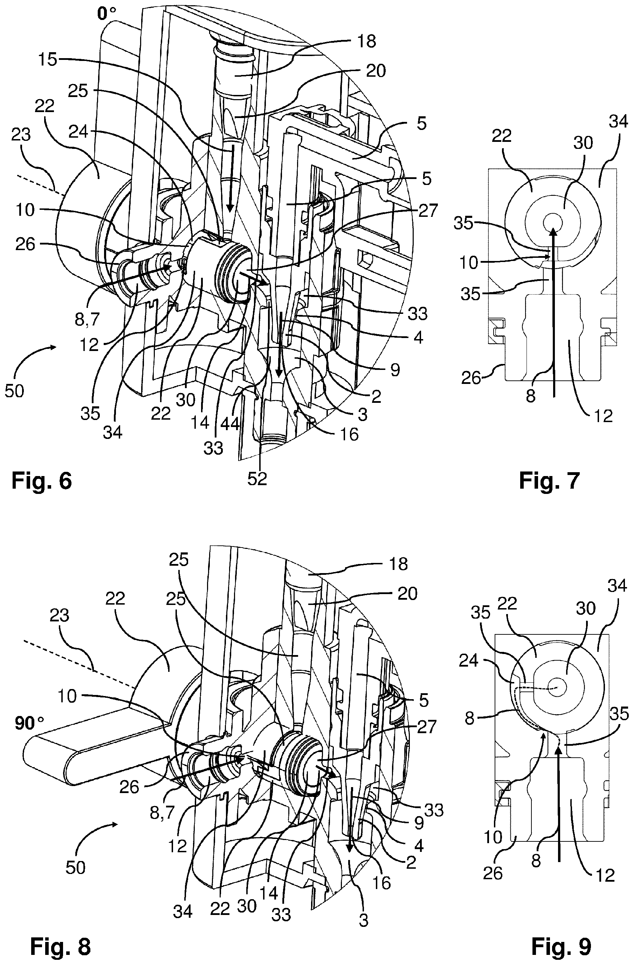

Genauer ist in der Figur 11, aber noch besser in der Figur 2, zu sehen, dass die Dampfdüse 2 die Beimischöffnung 4 mit begrenzt und somit den Eintrittsort 38 mit definiert. Denn die besagte Beimischöffnung 4 ist ringförmig ausgestaltet und konzentrisch zur Dampfdüse 2 angeordnet, wie man gut in der perspektivischen Ansicht der Figur 2 oder etwa in den Figuren 6 und 8 erkennt.

Der Eintrittsort 38 ist dabei durch eine Verengung 40 gebildet (Vgl. Figur 3), die eine Ansaugkammer 17, welche der Mischkammer 3 in Strömungsrichtung des Milchstroms 8 vorgelagert ist, von der Mischkammer 3 separiert. In die Ansaugkammer 17 strömt der Milchstrom 8 als ein Milch-und-Luft-Strom 14. Mit anderen Worten enthält der Milchstrom 8 somit einen Luftanteil, dessen Zweck weiter unten noch genauer zu erläutern sein wird.

Die Ansaugkammer 17 umgibt die Dampfdüse 2 ringförmig (vergleiche Figur 2 und 6) und bildet eine ebenfalls ringförmig ausgebildete Umlenkfläche 46 aus. Mittels dieser Umlenkfläche 46 wird der zunächst quer in Bezug zum Dampfstrom 9 in die Ansaugkammer 17 einströmende Milchstrom 8 so umgelenkt, dass der Milchstrom 8 die Beimischöffnung 4 bereits in Richtung 51 des Dampfstroms 9 passiert, gut anhand der gestrichelten Linie in Figur 11 zu erkennen ist.

Genauer umströmt der Milchstrom 8 bereits in der Ansaugkammer 17 die Dampfdüse 2 und tritt danach als ein Mantelstrom durch die ringförmig ausgebildete Beimischöffnung 4 in die Mischkammer 3 ein. Danach nähert sich der Milchstrom 8 als ein Mantelstrom dem Dampfstrom 9 kontinuierlich an und hüllt diesen mantelförmig ein, bis er sich mit diesem zu einem Dampf-Milch-Strom 49 vereinigt (Vgl. Figur 11).

Genauer geschieht diese Vereinigung mithilfe eines Fangtrichters 44 (Vgl. Fig. 6 und 11), der in der Mischkammer 3 ausgebildet ist und der die Milch 7 und den Dampf 5 auffängt und vereinigt. Der Fangtrichter 44 verengt sich dabei in Richtung 51 des Dampfstroms 9, wobei er gerade zentrisch zur Dampfaustrittsöffnung 16 ausgerichtet ist (Vgl. Figur 11).

Durch diese weitere Verengung 40 wird die Mischkammer 3 von einer nachgelagerten Zerstäubungskammer 41 separiert, wobei gleichzeitig durch die Verengung 40 ein Beschleunigungsabschnitt 45 zum Beschleunigen des Dampf-Milch-Stroms 49 ausgebildet wird (Vgl. Figur 11). Dadurch strömt der Dampf-Milch-Strom 49 in hoher Geschwindigkeit in die nachfolgende Zerstäubungskammer 41 und prallt dort auf einen zentral angeordneten Prallkörper 31, wodurch es zu einer turbulenten Verwirbelung des Dampf-Milch-Stroms 49 und damit zu einem Wärmeübertrag von dem heißen Dampf 5 auf die zu erwärmende Milch 7 kommt.

Im Ergebnis kann die zuvor beschriebene Vorrichtung 1 Milch mit Temperaturen bis zu 80°C aus der Milchaustrittsöffnung 28 fördern (Vgl. Fig. 3), ohne dass es - trotz sehr geringer Förderrate - zu einem Abriss des Milchstroms 8 kommt.

Wie weiter unten noch im Detail erläutert wird, kann die zuvor anhand der Figuren erläuterte Milchfördervorrichtung 1 auch als eine Milchaufschäumvorrichtung 50 verwendet werden. In diesem Fall fördert die Milchfördervorrichtung 1 einen Milchstrom 8 in die Mischkammer 3, der einen Luftanteil enthält. Wird dieser Milch-und-Luft-Strom 14 mit dem Dampf 5 in der Zerstäubungskammer 41 verwirbelt, so entsteht Milchschaum.

In einem solchen Fall ist es ganz besonders vorteilhaft, wenn die Milchfördervorrichtung 1 einen variablen Öffnungsquerschnitt 10 aufweist, durch den ein Luftstrom 14, vorzugsweise gleichzeitig mit dem Milchstrom 8, geleitet werden kann. Denn wie noch genauer zu erläutern sein wird, kann dadurch auch bei geringen Förderraten sichergestellt werden, dass der Milchstrom 8 nicht abreißt, weil der Luftstrom 14 die Oberhand gewinnt.

Gemäß einem weiteren Aspekt der Erfindung kann mit der in den Figuren gezeigten Milchfördervorrichtung 1 auch Milchschaum gefördert werden. Das heißt die Milchfördervorrichtung 1 kann insbesondere als eine Milchaufschäumvorrichtung 50 eingesetzt werden, die in dem besagten Kaffeevollautomaten verwendet werden kann, um Kaffee-Getränke bereitzustellen, die Milchschaum beinhalten, also beispielsweise Cappuccino.

Wie in den Figuren 2 und 3 gut zu erkennen ist, weist die Milchaufschäumvorrichtung 50 hierzu eine Dampfdüse 2 auf, mit der ein Dampfstrom 9 erzeugbar ist, der aus einer Dampfaustrittsöffnung 16 austritt und in eine der Dampfdüse 2 nachgelagerte Mischkammer 3 strömt. Zu diesem Zweck ist auch ein Dampfzufuhranschluss 32 vorgesehen von dem Dampf 5 in die Dampfdüse 2 gelangt.

Mithilfe des Dampfstroms 9 kann sowohl Milch 7 als auch Luft 6 in die Mischkammer 3 mit Hilfe des Venturi-Effekts gefördert werden, um dort die Milch 7 und die Luft 6 zu einem stabilen Milchschaum 13 aufzuschäumen. Um die Milchaufschäumvorrichtung 50 konstruktiv einfach zu gestalten, ist dabei auf eine zusätzliche Pumpe verzichtet worden, sodass die Milch 7 und die Luft 6 als ein Milch-und-Luft-Strom 14 ausschließlich aufgrund des mit der Dampfdüse 2 erzeugten Unterdrucks in die Mischkammer 3 gefördert werden.

Zum Aufschäumen der Milch 7 ist in der Mischkammer 3 ein Prallkörper 31 vorgesehen, an welchem es zu einer turbulenten Verwirbelung der Milch 7 und der Luft 6 kommt, sodass feinporiger Milchschaum 13 entsteht, der dann aus einer Milchschaumaustrittsöffnung 28 des in den Figuren 2 und 3 gezeigten Auslaufmoduls 29 strömt.

Die Milch 7 wird dabei über einen Milchzufuhranschluss 26 und eine sich daran anschließende Milchzuführung 12, die in Figur 1 zu erkennen ist, der Milchaufschäumvorrichtung 50 zugeführt, sodass ein Milchstrom 8 (Vgl. die Figur 6) in die Mischkammer 3 geführt ist. Ferner ist auch eine entsprechende Luftzuführung 11 vorgesehen, mit der ein Luftstrom 15 in die Mischkammer 3 geführt ist, wobei der Luftstrom 15 aus der Umgebungsluft gewonnen wird, wie anhand der Figuren 2 und 3 zu erkennen ist.

Die Milchaufschäumvorrichtung 50 weist ferner einen Regelkörper 22 auf, der drehbar um eine Regelachse 23 gelagert ist. Mit dem Regelkörper 22 ist ein veränderbarer Öffnungsquerschnitt 10 einstellbar, der eine Durchflussrate des Milchstroms 8 vermindert beziehungsweise einstellt. Wie noch genauer zu erläutern sein wird, kann dabei durch eine Rotation des Regelkörpers 22 eine Flussrate des Milchstroms 8 präzise und kontinuierlich eingestellt werden.

Da die Dampfdüse 2 im Wesentlichen einen konstanten Dampfstrom 9 erzeugt, kann die Temperatur des austretenden Milchschaums 13 mithilfe des Regelkörpers 22 eingestellt werden. Denn sobald die Flussrate des Milchstroms 8 verringert wird, bei im Wesentlichen gleichbleibender Flussrate des Dampfstroms 9, erhöht sich die Temperatur des Milchschaums 13 entsprechend.

Dies bedeutet, dass besonders hohe Temperaturen des Milchschaums 13 gerade dann erreicht werden, wenn die Flussrate des Milchstroms 8 am geringsten ist.

Um nun in einer solchen Situation zu verhindern, dass der Milchstrom 8 abreißt und nur noch Luft 6 in die Mischkammer 3 strömt, ist erfindungsgemäß der Luftstrom 15 durch den veränderbaren Öffnungsquerschnitt 10 in die Mischkammer 3 geführt.

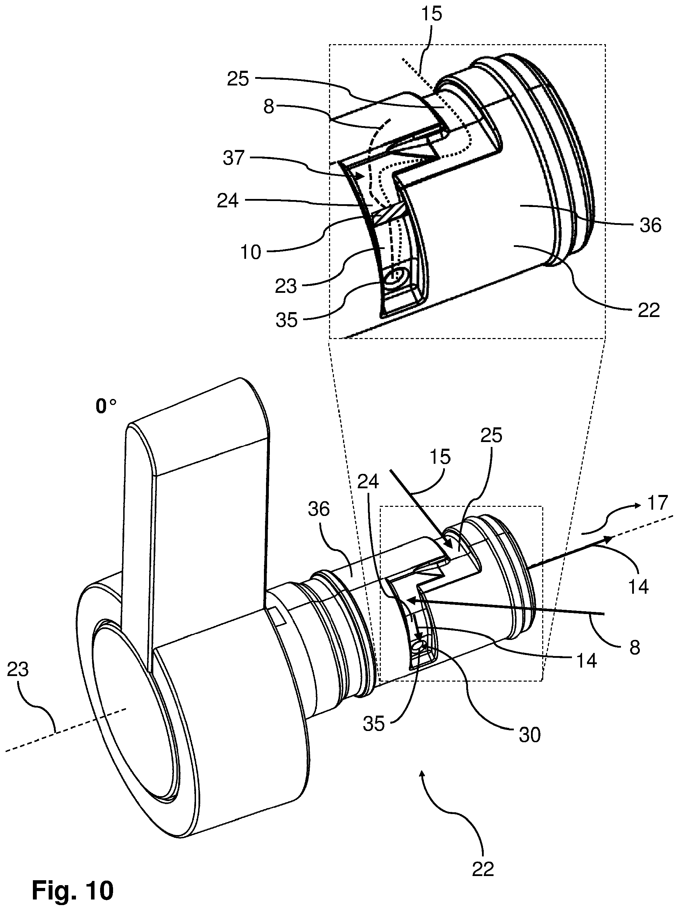

Wie die detaillierte Ansicht des Regelkörpers 22 gemäß der Figur 10 zeigt, weist der Regelkörper 22 dazu einen ersten Oberflächenkanal 24 zur Führung der Milch 7 beziehungsweise des Milchstroms 8 auf sowie einen Luft-Oberflächenkanal 25 zur Führung der Luft 6 beziehungsweise des Luftstroms 15. Diese beiden Oberflächenkanäle 24, 25 sind jeweils außenumfangsseitig in einer Umfangsaußenfläche beziehungsweise in einer Außenkontur 36 des Regelkörpers 22 ausgebildet. Die Umfangsaußenfläche / Außenkontur 36 des Regelkörpers 22 ist dabei zylindrisch ausgebildet, um eine Rotation des Regelkörpers 22 zu ermöglichen, wie die Detailansicht der Figur 10 zeigt.

Anhand der detaillierten Ansichten gemäß den Figuren 6 und 8 ist ersichtlich, dass der Regelkörper 22 abdichtend in einer korrespondierend zu dem Regelkörper 22 ausgebildeten Regelkörperaufnahme 34 gelagert ist. Dabei definiert eine Innenfläche der Regelkörperaufnahme 34 mit dem jeweiligen Oberflächenkanal 24, 25 einen jeweiligen Durchflussquerschnitt, der eine Flussrate des Milchstroms 8 beziehungsweise des Luftstroms 15 mitbestimmt.

Wie die Detailansicht der Figur 10 zeigt, ist eine Kanaltiefe des Oberflächenkanals 24 in Umfangsrichtung veränderlich ausgestaltet. Dabei bestimmt die jeweilige Kanaltiefe des Oberflächenkanals 24 zusammen mit der Regelkörperaufnahme 34 den veränderbaren Öffnungsquerschnitt 10, durch welchen sowohl der Luftstrom 15 als auch der Milchstrom 8 geführt sind, wie anhand der gestrichelten beziehungsweise gepunkteten Linien in der Detailansicht der Figur 10 zu erkennen ist.

Zu diesem Zweck mündet der Luft-Oberflächenkanal 25 in den Oberflächenkanal 24, sodass an der in Figur 10 gezeigten Mündungsstelle 37 die Luftzuführung 11 und die Milchzuführung 12 gerade zusammengeführt sind und zwar noch vor dem veränderbaren Öffnungsquerschnitt 10. Mit anderen Worten ist somit die Luft 6 beziehungsweise der Luftstrom 15 mithilfe des Luft-Oberflächenkanals 25 an die Mündungsstelle 37 und von dort zu dem veränderbaren Öffnungsquerschnitt 10 hingeführt.

Mit anderen Worten verändert sich somit die Querschnittsfläche des Öffnungsquerschnitts 10, sobald der Regelkörper 22 rotiert wird. Diese Veränderung geschieht kontinuierlich, sodass der Öffnungsquerschnitt 10 durch Rotation des Regelkörpers 22 kontinuierlich veränderbar ist. Folglich kann dadurch eine Flussrate des Milch-und-Luft-Stroms 14 durch den veränderbaren Öffnungsquerschnitt 10 kontinuierlich verändert werden.

In der in den Figuren 6 und 7 gezeigten 0°-Position des Regelkörpers 22 ist der veränderbare Öffnungsquerschnitt 10 dabei gerade durch eine Durchgangsöffnung 35 bestimmt, die in eine Kammer 30 im Innern des Regelkörpers 22 mündet (Vgl. Figur 7 mit Figur 3). In dieser Position des Regelkörpers 22 strömt somit sowohl der Luftstrom 15 als auch der Milchstrom 8 durch die als variabler Öffnungsquerschnitt 10 fungierende Einströmöffnung 33 in die Kammer 30 und von dort als Milch-und-Luft-Strom 14 durch eine Einströmöffnung 33 in eine Ansaugkammer 17 und von dort durch eine Beimischöffnung 4 in die Mischkammer 3 (Vgl. die Figuren 6 und 8).

In der in den Figuren 8 und 9 gezeigten 90°-Position des Regelkörpers 22 hingegen strömt sowohl der Luftstrom 15 als auch der Milchstrom 8 in dem Oberflächenkanal 24 zunächst entlang des Umfangs des Regelkörpers 22, dann durch den in Figur 10 als schraffierte Fläche illustrierten variablen Öffnungsquerschnitt 10 und erst danach durch die Durchgangsöffnung 35 in die Kammer 30, um von dort in die Ansaugkammer 17 und schließlich in die Mischkammer 3 zu gelangen. In dieser Situation ist also gerade die als schraffierte Fläche in Figur 10 illustrierte Querschnittsfläche für den Durchfluss des Milch-und-Luft-Stroms 14 bestimmend und fungiert daher als variabler Öffnungsquerschnitt 10 im Sinne der Erfindung.

In beiden Situationen (Figur 6 / Figur 8) passiert die Luft 6 zusammen und gleichzeitig mit der Milch 7 den veränderbaren Öffnungsquerschnitt 10 als ein Milch-und-Luft-Strom 14, wobei der eingangs erwähnte Luftstrom 15 und der eingangs erwähnte Milchstrom 8 den Milch-und-Luft-Strom 14 ausbilden.

Wie anhand der Detailansicht der Figur 10 leicht vorstellbar ist, strömen dabei beide Fluide, also die Milch 7 und die Luft 6, nebeneinander durch den variablen Öffnungsquerschnitt 10 und bilden dabei eine gemeinsame fluidische Grenzfläche aus, über die die beiden Fluide miteinander wechselwirken. Dies hat zur Folge, dass im Bereich des veränderbaren Öffnungsquerschnitts 10 der Luftstrom 15 den Milchstrom 8 zumindest teilweise begrenzt. Die restliche Begrenzung wird dabei durch die Wände des Oberflächenkanals 24 geschaffen sowie durch die Innenfläche der Regelkörperaufnahme 34.

Hierbei ist der durch die variable Kanaltiefe des Oberflächenkanals 24 bestimmte veränderbare Öffnungsquerschnitt 10 gerade so dimensioniert, dass eine Einstellung des veränderbaren Öffnungsquerschnitts 10 durch Rotieren des Regelkörpers 22 sowohl den Milchstrom 8 als auch den Luftstrom 15 gleichzeitig und insbesondere gleichläufig einstellt. Dies bedeutet, dass für den Fall, dass durch eine Rotation des Regelkörpers 22 von der in Figur 6 gezeigten 0°-Position in die in Figur 8 gezeigte 90°-Position der veränderbare Öffnungsquerschnitt 10 reduziert wird, sowohl eine Flussrate des Milchstroms 8 als auch gleichzeitig eine Flussrate des Luftstroms 15 reduziert wird. Somit wird also automatisch der Luftstrom 15 gedrosselt, sobald der Milchstrom 8 reduziert wird, beispielsweise um eine hohe Temperatur des austretenden Milchschaums 13 zu erreichen.

Aufgrund der fluidischen Kopplung zwischen dem Milchstrom 8 und dem Luftstrom 15, die durch die gemeinsame fluidische Grenzfläche entsteht, kann es dabei praktisch nicht mehr vorkommen, dass der Milchstrom 8 abreißt.

Die insbesondere in der Längsschnitt-Ansicht der Figur 3 (in Verbindung mit Figur 3) gut zu erkennen ist, ist der veränderbare Öffnungsquerschnitt 10 der Beimischöffnung 4, durch die Luft 6 und Milch 7 die Mischkammer 3 gelangt, gerade vorgelagert in Bezug auf die Strömungsrichtung des Milch-und-Luft-Stroms 14. Ferner ist zu erkennen, dass der Milch-und-Luft-Strom 14 noch vor der Beimischöffnung 4 durch die der Mischkammer 3 vorgelagerte Ansaugkammer 17 geführt ist.

Die Durchgangsöffnung 35, die Kammer 30, die Einströmöffnung 33, die Ansaugkammer 17, und die Beimischöffnung 4 bilden somit eine Milch-und-Luft-Zuleitung 21 aus, die den Milch-und-Luft-Strom 14 von dem veränderbaren Öffnungsquerschnitt 10 ausgehend in die Mischkammer 3 führt.

Wie zum Beispiel in den Figuren 2, 3 und 6 zu erkennen ist, strömt die Luft 6 zunächst durch einen Durchflussverminderer 18 in Form einer Lochblende 19 und danach durch eine Lippendichtung 20. Während die Lochblende 19 eine Flussrate des Luftstroms 15 vermindert dient die Lippendichtung dazu, einen eventuellen Rückfluss der Milch 7 in Richtung der Lochblende 19 zu verhindern.

Nicht gezeigt in den Figuren ist eine weitere mögliche Ausgestaltung der Milchaufschäumvorrichtung 50, bei welcher der Luftstrom 15, welcher durch den veränderbaren Öffnungsquerschnitt 10 in die Mischkammer 3 einströmt, mittels einer Luft-Abschaltvorrichtung in Form eines elektrisch oder manuell ansteuerbaren Sperrventils an- beziehungsweise abschaltbar ist. Wird die Luft-Abschaltvorrichtung von dem Kaffeevollautomaten aktiviert, so kann keine Luft 6 mehr in die Mischkammer 3 strömen aber weiterhin kann Milch 7 durch den variablen Öffnungsquerschnitt 10 in die Mischkammer 3 strömen. In diesem Fall fördert die Milchaufschäumvorrichtung 50 durch die in Figur 3 gezeigte Milchschaumaustrittsöffnung 28 des Auslaufmoduls 29 also gerade keinen Milchschaum 13, sondern durch den Dampf 5 erhitzte Milch 7. Bei einer solchen Ausgestaltung kann also mit der Milchaufschäumvorrichtung 50 sowohl Milchschaum 13 als auch heiße Milch 7 ausgegeben werden.

Zusammenfassend schlägt die Erfindung gemäß einem ersten Aspekt für eine Milchfördervorrichtung 1, die Milch 7 auf Basis des Venturi-Effekts mit Hilfe eines von einer Dampfdüse 2 abgegebenen Dampfstroms 9 fördert, vor, durch entsprechende Ausrichtung einer Beimischöffnung 4 und gegebenenfalls unter Zuhilfenahme von Umlenkflächen 46 einen von einem Dampfstrom 9 angesaugten Milchstrom 8 tangential auf den Dampfstrom 9 auffließen zu lassen, um so eine möglichst störungsfreie Förderung des Milchstroms 8 auch bei sehr geringen Flussraten des Milchstroms 8 noch gewährleisten zu können. Zu diesem Zweck wird noch bevor der Milchstrom 8 in Kontakt zu dem Dampfstrom 9 gerät, der Milchstrom 8 in Richtung 51 des Dampfstroms 9 ausgerichtet.

Gemäß einem zweiten Aspekt hat die Erfindung zudem die Verbesserung der Qualität eines Milchschaums 13 zum Ziel, der mittels der Milchfördervorrichtung 1 - die hierzu als eine Milchaufschäumvorrichtung 50 verwendet wird - hergestellt wird. Dazu weist die Milchfördervorrichtung 1 beziehungsweise die Milchaufschäumvorrichtung 50 eine Mischkammer 3 auf, in welcher mittels eines Dampfstroms 9 Luft 6 und Milch 7 zu dem Milchschaum 13 aufschäumbar sind. Es wird vorgeschlagen, dass eine jeweilige Flussrate eines Luftstroms 15 als auch eines Milchstroms 8, die jeweils in die Mischkammer 3 strömen, dadurch eingestellt wird, dass die Luft 6 und die Milch 7 stets gemeinsam durch einen einstellbaren, variablen Öffnungsquerschnitt 10 in die Mischkammer 3 fließen, der als ein Flussratenverminderer beziehungsweise als eine Drossel für den Luftstrom 15 und den Milchstrom 8 wirkt.

### Bezugszeichenliste

- 1: Milchfördervorrichtung
- 2: Dampfdüse
- 3: Mischkammer
- 4: Beimischöffnung
- 5: Dampf
- 6: Luft
- 7: Milch
- 8: Milchstrom
- 9: Dampfstrom
- 10: veränderbarer Öffnungsquerschnitt
- 11: Luftzuführung
- 12: Milchzuführung
- 13: Milchschaum
- 14: Milch-und-Luft-Strom
- 15: Luftstrom
- 16: Dampfaustrittsöffnung
- 17: Ansaugkammer
- 18: Durchflussverminderer (für 15)
- 19: Lochblende
- 20: Lippendichtung
- 21: Milch-und-Luft-Zuleitung
- 22: Regelkörper
- 23: Regelachse
- 24: Oberflächenkanal (für 7/8)
- 25: Luft-Oberflächenkanal (für 6/15)
- 26: Milchzufuhranschluss
- 27: Milch-und-Luft-Zuleitung
- 28: Milchaustrittsöffnung / Milchschaumaustrittsöffnung
- 29: Auslaufmodul
- 30: Kammer
- 31: Prallkörper
- 32: Dampfzufuhranschluss
- 33: Einströmöffnung
- 34: Regelkörperaufnahme
- 35: Durchgangsöffnung
- 36: Außenkontur (von 22)
- 37: Mündungsstelle
- 38: Eintrittsort (für 7 in 3)
- 39: Außenfläche (von 2)
- 40: Verengung
- 41: Zerstäubungskammer
- 42: Bereich (von 3)
- 43: lichte Weite (von 4)
- 44: Fangtrichter
- 45: Beschleunigungsabschnitt
- 46: Umlenkfläche
- 47: lichter Durchmesser (von 16)
- 48: Außendurchmesser (von 2)
- 49: Dampf-und-Milch-Strom
- 50: Milchaufschäumvorrichtung
- 51: Richtung des Dampfstroms
- 52: Verengungsabschnitt

## Patentansprüche

1. Milchfördervorrichtung (1), insbesondere zur Verwendung in einem Kaffeevollautomaten und/oder als eine Milchaufschäumvorrichtung (50), mit einer Dampfdüse (2) zur Erzeugung eines Dampfstroms (9) und einer sich an eine Dampfaustrittsöffnung (16) der Dampfdüse (2) anschließenden Mischkammer (3), wobei die Milch (7) an einem Eintrittsort (38) in die Mischkammer (3) geführt ist, wobei der Eintrittsort (38) in Bezug auf eine Richtung (51) des Dampfstroms (9) der Dampfaustrittsöffnung (16) vorgelagert ist,
**dadurch gekennzeichnet,**
- **dass** der Eintrittsort (38) mittels einer Verengung (40) gebildet ist, wobei
- die Verengung (40) eine strukturelle Grenze ausbildet, die eine der Mischkammer (3) vorgelagerte Ansaugkammer (17) von der Mischkammer (3) separiert,
- wobei die Mischkammer (3) und die Ansaugkammer (17) ringförmig um die Dampfdüse (2) angeordnet sind und wobei
- die Mischkammer (3) einen größeren Öffnungsquerschnitt aufweist als die Verengung (40).

2. Milchfördervorrichtung (1) gemäß Anspruch 1, wobei eine den Eintrittsort (38) definierende und in die Mischkammer (3) mündende Beimischöffnung (4) so ausgerichtet und/oder geformt ist, dass die Milch (7) als ein Milchstrom (8) in Richtung des Dampfstroms (9) an den Dampfstrom (9) heran geführt ist, vorzugsweise derart, dass in einem der Dampfaustrittsöffnung (16) vorgelagerten Bereich (42) der Mischkammer (3) der Milchstrom (8) in Richtung des Dampfstroms (9), insbesondere entlang einer Außenfläche (39) der Dampfdüse (2), strömt.

3. Milchfördervorrichtung (1) gemäß einem der vorhergehenden Ansprüche, wobei eine Außenfläche (39) der Dampfdüse (2) den Eintrittsort (38), insbesondere die Beimischöffnung (4), zumindest abschnittsweise begrenzt.

4. Milchfördervorrichtung (1) gemäß einem der vorhergehenden Ansprüche, wobei die Verengung durch einen Verengungsabschnitt (52) zumindest abschnittsweise mit konstantem Öffnungsquerschnitt ausgebildet ist, insbesondere wobei der Verengungsabschnitt (52) einen konstanten Öffnungsquerschnitt über eine gesamte Länge des Verengungsabschnitt (52) aufweist.

5. Milchfördervorrichtung (1) gemäß Anspruch 4, wobei die Ansaugkammer (17) und/oder die Dampfdüse (2) eine Umlenkfläche (46) zum Umlenken des Milchstroms (8) in Richtung des Dampfstroms (9) aufweist, vorzugsweise derart, dass der Milchstrom (8) die Beimischöffnung (4) bereits in Richtung des Dampfstroms (9) passiert.

6. Milchfördervorrichtung (1) gemäß einem der vorhergehenden Ansprüche, wobei eine Strömungsführung eines Milchstroms (8) oder eines Milch-Luft-Stroms (14) vor dem Eintrittsort eine maximale Richtungsänderung von höchstens 120 Grad, insbesondere von höchstens 90 Grad, aufweist und/oder wobei die Strömungsführung spitzkehrenfrei ausgebildet ist.

7. Milchfördervorrichtung (1) gemäß einem der vorhergehenden Ansprüche, wobei ein Abstand zwischen dem Eintrittsort (38) und der Dampfaustrittsöffnung (16) größer ist als ein lichter Durchmesser (47) der Dampfaustrittsöffnung (16) und/oder als eine lichte Weite (43) der Beimischöffnung (4) und/oder als ein Außendurchmesser (48) der Dampfdüse (2) an der Stelle der Dampfaustrittsöffnung (16).

8. Milchfördervorrichtung (1) gemäß einem der vorhergehenden Ansprüche, wobei eine der Mischkammer (3) in Dampfströmungsrichtung nachgelagerte Zerstäubungskammer (41) ausgebildet ist,
- vorzugsweise die mittels einer weiteren Verengung (40) von der Mischkammer (3) separiert ist und/oder die einen Prallkörper (31) zum Zerstäuben von Milch (7) aufweist.

9. Milchfördervorrichtung (1) gemäß Anspruch 8, wobei zwischen der Mischkammer (3) und der Zerstäubungskammer (41) ein Beschleunigungsabschnitt (45) zum Beschleunigen eines Dampf-Milch-Gemischs ausgebildet ist.

10. Milchfördervorrichtung (1) gemäß einem der vorhergehenden Ansprüche, wobei die Mischkammer (3) einen Fangtrichter (44) aufweist, der den Dampfstrom (9) und Milchstrom (8) auffängt und vereinigt, vorzugsweise wobei der Fangtrichter (44) zur Dampfaustrittsöffnung (16) ausgerichtet ist und/oder sich in Dampfströmungsrichtung verengt.

11. Milchfördervorrichtung (1) gemäß einem der vorhergehenden Ansprüche, insbesondere in Form einer Milchaufschäumvorrichtung (50), wobei ein von der Milchfördervorrichtung (1) geförderter Milchstrom (8), der an dem Eintrittsort (38) in die Mischkammer (3) strömt, noch vor dem Eintrittsort (38) mittels eines variablen Öffnungsquerschnitts (10) einstellbar ist.

12. Milchfördervorrichtung (1) gemäß Anspruch 11, mit einer Luftzuführung (11), sodass gleichzeitig mit dem Milchstrom (8) durch den variablen Öffnungsquerschnitt (10) ein Luftstrom (14) leitbar ist, insbesondere derart, dass ein Milch-und-Luft-Strom (14) am Eintrittsort (38) in die Mischkammer (3) geführt ist und/oder
wobei der Milchstrom (8) einen Luftanteil aufweist und somit als ein Milch-und-Luft-Strom (14) in die Mischkammer (3) gelangt, insbesondere sodass in der Mischkammer (3) ein Dampf-Milch-Luft-Gemisch entsteht.

13. **Verfahren zum Fördern von Milch (7)** mit Hilfe eines von einer Dampfdüse (2) erzeugten Dampfstroms (9) und auf Basis des Venturi-Effekts,
- wobei die Milch (7) als ein Milch-und-Luft-Strom (8) längs des Dampfstroms (9) ausgerichtet wird, insbesondere wobei hierzu eine Milchfördervorrichtung (1) nach einem der vorangehenden Ansprüche verwendet wird, wobei hierzu
- die Milch (7) mit Luft (6) vorab in einer Ansaugkammer (17), die einer Mischkammer (3) vorgelagert und mittels einer eine strukturelle Grenze ausbildenden Verengung (40) von der Mischkammer (3) separiert ist, zu einem Milch-und-Luft-Strom (14) vermischt wird,
- bevor der Milch-und-Luft-Strom (14) anschließend in der Mischkammer (3) mit dem Dampfstrom (9) vereinigt wird und
- wobei dabei der Milch-und-Luft-Strom (14) vor Eintritt in die Mischkammer (3) durch die Verengung (40) strömt, deren Öffnungsquerschnitt kleiner ist als derjenige der Mischkammer (3), sodass ein Zurückströmen eines Dampf-Milchgemischs aus der Mischkammer (3) in die vorgelagerte Ansaugkammer (17) vermieden wird.

14. Verfahren gemäß Anspruch 13, wobei der Milchstrom (8) in Richtung (51) des Dampfstroms (9) ausgerichtet wird,
- mit Hilfe einer Beimischöffnung (4), die einer Dampfaustrittsöffnung (16) der Dampfdüse (2) vorgelagert ist, und/oder
- derart, dass der Milchstrom (8) bereits in Richtung des Dampfstroms (9) strömt, wenn er in die Mischkammer (3) einströmt.

15. Verfahren gemäß Anspruch 13 oder 14, wobei der Milchstrom (8) mittels einer Umlenkfläche (46) in einer der Mischkammer (3) vorgelagerten Ansaugkammer (17) ausgerichtet wird und/oder
- konzentrisch zur Dampfdüse (2) in die besagte Mischkammer (3) strömt und/oder
- wobei der Milchstrom (8) in einem Bereich (42), der einer Dampfaustrittsöffnung (16) der Dampfdüse (2) vorgelagert ist, in Richtung (51) des Dampfstroms (9) entlang einer Außenfläche (39) der Dampfdüse (2) strömt.

16. Verfahren gemäß einem der Ansprüche 13 bis 15, wobei der Milchstrom (8) quer zur Richtung des Dampfstroms (9) in die Ansaugkammer (17) strömt und/oder
- mittels eines, vorzugsweise rotationssymmetrisch ausgebildeten und/oder zu einer Dampfaustrittsöffnung (16) der Dampfdüse (2) ausgerichteten, Fangtrichters (44) mit dem Dampfstrom (9) in der Mischkammer (3) vereinigt wird.

## Claims

1. Milk delivery device (1), in particular for use in a fully automatic coffee machine and/or as a milk-frothing device (50), having a steam nozzle (2) for generating a steam flow (9), and a mixing chamber (3) adjoining a steam outlet opening (16) of the steam nozzle (2), wherein the milk (7) is guided at an entry point (38) into the mixing chamber (3), wherein the entry point (38) is upstream with respect to a direction (51) of the steam flow (9) of the steam outlet opening (16), **characterized**
- **in that** the entry point (38) is formed by means of a constriction (40), wherein
- the constriction (40) forms a structural boundary which separates an intake chamber (17) upstream of the mixing chamber (3) from the mixing chamber (3),
- wherein the mixing chamber (3) and the intake chamber (17) are arranged annularly around the steam nozzle (2), and wherein
- the mixing chamber (3) has a greater opening cross section than the constriction (40).

2. Milk delivery device (1) according to Claim 1, wherein an admixing opening (4) defining the entry point (38) and opening into the mixing chamber (3) is oriented and/or shaped in such a manner that the milk (7) is guided as a milk flow (8) in the direction of the steam flow (9) to the steam flow (9), preferably in such a manner that, in a region (42) of the mixing chamber (3) upstream of the steam outlet opening (16), the milk flow (8) flows in the direction of the steam flow (9), in particular along an outer surface (39) of the steam nozzle (2).

3. Milk delivery device (1) according to either of the preceding claims, wherein an outer surface (39) of the steam nozzle (2) bounds the entry point (38), in particular the admixing opening (4), at least in sections.

4. Milk delivery device (1) according to one of the preceding claims, wherein the constriction is formed at least in sections by a constriction section (52) having a constant opening cross section, in particular wherein the constriction section (52) has a constant opening cross section over an entire length of the constriction section (52).

5. Milk delivery device (1) according to Claim 4, wherein the intake chamber (17) and/or the steam nozzle (2) have/has a deflecting surface (46) for deflecting the milk flow (8) in the direction of the steam flow (9), preferably in such a manner that the milk flow (8) already passes through the admixing opening (4) in the direction of the steam flow (9).

6. Milk delivery device (1) according to one of the preceding claims, wherein a flow guide of a milk flow (8) or of a milk and air flow (14) upstream of the entry point has a maximum change in direction of at most 120 degrees, in particular of at most 90 degrees, and/or wherein the flow guide is free of switchbacks.

7. Milk delivery device (1) according to one of the preceding claims, wherein a distance between the entry point (38) and the steam outlet opening (16) is greater than a clear diameter (47) of the steam outlet opening (16) and/or than a clear width (43) of the admixing opening (4) and/or than an outer diameter (48) of the steam nozzle (2) at the location of the steam outlet opening (16).

8. Milk delivery device (1) according to one of the preceding claims, wherein an atomization chamber (41) downstream of the mixing chamber (3) in the steam flow direction is formed,
- preferably said atomization chamber being separated from the mixing chamber (3) by means of a further constriction (40) and/or said atomization chamber having an impact body (31) for atomizing milk (7).

9. Milk delivery device (1) according to Claim 8, wherein an acceleration section (45) for accelerating a steam and milk mixture is formed between the mixing chamber (3) and the atomization chamber (41).

10. Milk delivery device (1) according to one of the preceding claims, wherein the mixing chamber (3) has a collecting funnel (44) which collects and combines the steam flow (9) and the milk flow (8), preferably wherein the collecting funnel (44) is aligned with the steam outlet opening (16) and/or is constricted in the steam flow direction.

11. Milk delivery device (1) according to one of the preceding claims, in particular in the form of a milk-frothing device (50), wherein a milk flow (8) which is delivered by the milk delivery device (1) and flows into the mixing chamber (3) at the entry point (38) is still adjustable upstream of the entry point (38) by means of a variable opening cross section (10).

12. Milk delivery device (1) according to Claim 11, having an air supply (11) such that, at the same time as the milk flow (8), an air flow (14) can be conducted through the variable opening cross section (10), in particular in such a manner that a milk and air flow (14) is guided at the entry point (38) into the mixing chamber (3), and/or wherein the milk flow (8) has an air portion and thus passes as a milk and air flow (14) into the mixing chamber (3), in particular such that a steam and milk and air mixture arises in the mixing chamber (3).

13. **Method for delivering milk (7)** with the aid of a steam flow (9) generated by a steam nozzle (2) and on the basis of the Venturi effect,
- wherein the milk (7) is oriented as a milk and air flow (8) along the steam flow (9), in particular wherein, for this purpose, a milk delivery device (1) according to one of the preceding claims is used, wherein, for this purpose,
- the milk (7) is mixed with air (6) beforehand in an intake chamber (17), which is upstream of a mixing chamber (3) and is separated from the mixing chamber (3) by means of a constriction (40) forming a structural boundary, to form a milk and air flow (14),
- before the milk and air flow (14) is subsequently combined in the mixing chamber (3) with the steam flow (9), and
- wherein the milk and air flow (14) before entering the mixing chamber (3) flows through the constriction (40), the opening cross section of which is smaller than that of the mixing chamber (3), and therefore flowing back of a steam and milk mixture out of the mixing chamber (3) into the upstream intake chamber (17) is avoided.

14. Method according to Claim 13, wherein the milk flow (8) is oriented in the direction (51) of the steam flow (9),
- with the aid of an admixing opening (4), which is upstream of a steam outlet opening (16) of the steam nozzle (2), and/or
- in such a manner that the milk flow (8) already flows in the direction of the steam flow (9) when said milk flow flows into the mixing chamber (3).

15. Method according to Claim 13 or 14, wherein the milk flow (8) is oriented by means of a deflecting surface (46) in an intake chamber (17) upstream of the mixing chamber (3), and/or
- flows concentrically with respect to the steam nozzle (2) into said mixing chamber (3), and/or
- wherein the milk flow (8) in a region (42) that is upstream of a steam outlet opening (16) of the steam nozzle (2) flows in the direction (51) of the steam flow (9) along an outer surface (39) of the steam nozzle (2).

16. Method according to one of Claims 13 to 15, wherein the milk flow (8) flows transversely with respect to the direction of the steam flow (9) into the intake chamber (17), and/or
- is combined with the steam flow (9) in the mixing chamber (3) by means of a collecting funnel (44), which is preferably rotationally symmetrical and/or is oriented with respect to a steam outlet opening (16) of the steam nozzle (2).

## Revendications

1. **Dispositif de transport de lait (1)**, en particulier destiné à être utilisé dans une machine à café entièrement automatique et/ou comme dispositif de moussage de lait (50), avec une buse à vapeur (2) pour générer un flux de vapeur (9) et une chambre de malaxage (3) se raccordant à une ouverture de sortie de vapeur (16) de la buse à vapeur (2), dans lequel le lait (7) est conduit au niveau d'un point d'entrée (38) dans la chambre de malaxage (3), le point d'entrée (38) étant situé en amont de l'ouverture de sortie de vapeur (16) par rapport à une direction (51) du flux de vapeur (9), **caractérisé en ce que**
- le point d'entrée (38) est formé au moyen d'un rétrécissement (40),
- ce rétrécissement (40) constituant une limite structurelle qui sépare une chambre d'aspiration (17) située en amont de la chambre de malaxage (3) de la chambre de malaxage (3),
- la chambre de malaxage (3) et la chambre d'aspiration (17) étant disposées en forme d'anneau autour de la buse à vapeur (2) et
- la chambre de malaxage (3) présentant une section d'ouverture plus grande que le rétrécissement (40).

2. Dispositif de transport de lait (1) selon la revendication 1, dans lequel une ouverture de mélange (4) définissant le point d'entrée (38) et débouchant dans la chambre de malaxage (3) est orientée et/ou formée de telle sorte que le lait (7) est conduit sous la forme d'un flux de lait (8) en direction du flux de vapeur (9) jusqu'au flux de vapeur (9), de préférence de manière à ce que, dans une zone (42) de la chambre de malaxage (3) située en amont de l'ouverture de sortie de vapeur (16), le flux de lait (8) s'écoule en direction du flux de vapeur (9), en particulier le long d'une surface extérieure (39) de la buse à vapeur (2).

3. Dispositif de transport de lait (1) selon une des revendications précédentes, dans lequel une surface extérieure (39) de la buse à vapeur (2) délimite au moins sur une partie le point d'entrée (38), en particulier l'ouverture de mélange (4).

4. Dispositif de transport de lait (1) selon une des revendications précédentes, dans lequel le rétrécissement est constitué par un segment rétréci (52) doté au moins sur une partie d'une section d'ouverture constante, en particulier ce segment rétréci (52) présentant une section d'ouverture constante sur toute la longueur du segment rétréci (52).

5. Dispositif de transport de lait (1) selon la revendication 4, dans lequel la chambre d'aspiration (17) et/ou la buse à vapeur (2) présentent une surface déflectrice (46) pour dévier le flux de lait (8) en direction du flux de vapeur (9), de préférence de sorte que le flux de lait (8) dépasse déjà l'ouverture de mélange (4) en direction du flux de vapeur (9).

6. Dispositif de transport de lait (1) selon une des revendications précédentes, dans lequel un écoulement d'un flux de lait (8) ou d'un flux lait/air (14) présente avant le point d'entrée un changement de direction maximal de 120 degrés maximum, en particulier de 90 degrés maximum, et/ou dans lequel l'écoulement se fait sans virage en épingle.

7. Dispositif de transport de lait (1) selon une des revendications précédentes, dans lequel une distance entre le point d'entrée (38) et l'ouverture de sortie de vapeur (16) est supérieure à un diamètre intérieur (47) de l'ouverture de sortie de vapeur (16) et/ou à une largeur intérieure (43) de l'ouverture de mélange (4) et/ou à un diamètre extérieur (48) de la buse à vapeur (2) à la place de l'ouverture de sortie de vapeur (16).

8. Dispositif de transport de lait (1) selon une des revendications précédentes, dans lequel en aval de la chambre de malaxage (3) dans le sens d'écoulement de la vapeur est formée une chambre de pulvérisation (41)
- de préférence qui est séparée de la chambre de malaxage (3) au moyen d'un autre rétrécissement (40) et/ou qui présente un corps d'impact (31) pour pulvériser le lait (7).

9. Dispositif de transport de lait (1) selon la revendication 8, dans lequel un segment d'accélération (45) est formé entre la chambre de malaxage (3) et la chambre de pulvérisation (41) pour accélérer un mélange vapeur/lait.

10. Dispositif de transport de lait (1) selon une des revendications précédentes, dans lequel la chambre de malaxage (3) comporte un entonnoir (44) qui recueille et fusionne le flux de vapeur (9) et le flux de lait (8), de préférence l'entonnoir (44) étant orienté vers l'ouverture de sortie de vapeur (16) et/ou se rétrécissant en direction de l'écoulement de vapeur.

11. Dispositif de transport de lait (1) selon une des revendications précédentes, en particulier sous la forme d'un dispositif de moussage de lait (50), dans lequel un flux de lait (8) transporté par le dispositif de transport de lait (1) et s'écoulant dans la chambre de malaxage (3) au point d'entrée (38) peut être régulé avant le point d'entrée (38) au moyen d'une section d'ouverture variable (10).

12. Dispositif de transport de lait (1) selon la revendication (11), doté d'une alimentation en air (11) de sorte qu'un flux d'air (14) peut être conduit en même temps que le flux de lait (8) à travers la section d'ouverture variable (10), en particulier de telle sorte
qu'un flux de lait et d'air (14) est conduit dans la chambre de malaxage (3) au point d'entrée (38) et/ou
dans lequel le flux de lait (8) comporte une proportion d'air et peut ainsi parvenir dans la chambre de malaxage (3) sous la forme d'un flux de lait et d'air (14), en particulier de telle sorte qu'un mélange vapeur/lait/air se produit dans la chambre de malaxage (3).

13. **Procédé pour le transport de lait (7)** à l'aide d'un flux de vapeur (9) généré par une buse à vapeur (2) et sur la base de l'effet Venturi,
- selon lequel le lait (7) est dirigé sous la forme d'un flux de lait et d'air (8) le long du flux de vapeur (9), en particulier selon lequel un dispositif de transport de lait (1) selon une des revendications précédentes est utilisé à cet effet, selon lequel, pour cela,
- le lait (7) est préalablement mélangé avec l'air (6) dans une chambre d'aspiration (17) qui est située en amont d'une chambre de malaxage (3) et est séparée de la chambre de malaxage (3) au moyen d'un rétrécissement (40) formant une limite structurelle, pour produire un flux de lait et d'air (14),
- après quoi le flux de lait et d'air (14) est fusionné avec le flux de vapeur (9) dans la chambre de malaxage (3) et
- selon lequel le flux de lait et d'air (14), avant d'entrer dans la chambre de malaxage (3), passe à travers le rétrécissement (40) dont la section d'ouverture est plus petite que celle de la chambre de malaxage (3), de sorte qu'un reflux d'un mélange vapeur/lait de la chambre de malaxage (3) dans la chambre d'aspiration (17) située en amont est évité.

14. Procédé selon la revendication 13, selon lequel le flux de lait (8) est dirigé dans la direction (51) du flux de vapeur (9),
- à l'aide d'une ouverture de mélange (4) qui est située en amont d'une ouverture de sortie de vapeur (16) de la buse à vapeur (2) et/ou
- de telle sorte que le flux de lait (8) s'écoule déjà en direction du flux de vapeur (9) quand il afflue dans la chambre de malaxage (3).

15. Procédé selon les revendications 13 ou 14, selon lequel le flux de lait (8) est orienté au moyen d'une surface déflectrice (46) dans une chambre d'aspiration (17) située en amont de la chambre de malaxage (3) et/ou
- afflue de manière concentrique par rapport à la buse à vapeur (2) dans ladite chambre de malaxage (3) et/ou
- selon lequel, dans une zone (42) qui est située en amont d'une ouverture de sortie de vapeur (16) de la buse à vapeur (2), le flux de lait (8) s'écoule dans la direction (51) du flux de vapeur (9) le long d'une surface extérieure (39) de la buse à vapeur (2).

16. Procédé selon une des revendications 13 à 15, selon lequel le flux de lait (8) afflue perpendiculairement à la direction du flux de vapeur (9) dans la chambre d'aspiration (17) et/ou
- est fusionné avec le flux de vapeur (9) dans la chambre de malaxage (3) au moyen d'un entonnoir (44) de préférence symétrique en rotation et/ou orienté vers une ouverture de sortie de vapeur (16) de la buse à vapeur (2).
